# EUROPEAN PATENT APPLICATION

(11) **EP 4 706 790 A2**
(43) Date of publication of application: **11.03.2026**
(21) Application number: 25223002.4
(22) Date of filing: 01.11.2021
(51) Int. Cl.: A63B 60/48

(54) **GOLF CLUB HEAD WITH INSERT**

(30) Priority: 30.10.2020 US 202063108232 P; 14.10.2021 US 202163262541 P
(62) Divisional of application: 21887750.4
(71) Applicant: Karsten Manufacturing Corporation, Phoenix, AZ 85029 (US)
(72) Inventor: BRUBAKER, Cole, D., Phoenix, 85029 (US); GREER, Evan, R., Phoenix, 85029 (US)
(74) Representative: Mewburn Ellis LLP

(57) **Abstract**

Described herein are embodiments of cavity back irons with inserts. In some embodiments, the insert has a plurality of voids. In some embodiments, the voids can have approximately the same size. In other embodiments, the voids can vary in size to create a variable density. The cavity back iron can include an undercut, a lip, or another rear structure. The insert can fill the back cavity and a majority of an undercut, lip, or maintaining feature. In some embodiments, the insert is made up of multiple pieces. In many embodiments, the insert can be press-fit into the cavity. Other embodiments of cavity back irons with inserts are described herein.

## Description

### RELATED APPLICATION DATA

This claims the benefit of U.S. Patent Application No. 63/108,232, filed on October 30, 2020, and claims the benefit of U.S. Patent Application No. 63/262,541, filed on October 14, 2021, the contents of which is entirely incorporated herein by reference.

### FIELD

The present disclosure relates generally to golf equipment, and more particularly, to iron-type golf club heads with inserts.

### BACKGROUND

Cavity back style game-improvement irons have a cavity that is exposed across the rear of the iron. It is common practice to include a badge within the rear cavity for aesthetics and vibrational dampening. However, current badges are typically rigid and abut only to a portion of the rear surface of the strike face due to rear walls limiting their ability to be placed over the entire rear surface. By only covering a portion of the strike face, the insert has limited damping ability. Further, finite element analysis has shown that the perimeter region and rear walls of cavity back irons tend to experience significantly more vibrations than the rest of the golf club. Therefore, there is a need in the art for a vibrational dampening insert that extends into the perimeter regions of cavity back iron while maintaining performance and providing greater ease of assembly.

### BRIEF DESCRIPTION OF THE DRAWINGS

FIG. 1 shows a front view of a golf club head, according to one embodiment.
FIG. 2 shows a rear view of the golf club head of FIG. 1.
FIG. 3 shows a rear perspective view of the golf club head of FIG. 1.
FIG. 4 shows a cross-sectional view of the golf club head of FIG. 1.
FIG. 5 shows a rear view of an insert and golf club head of FIG. 1.
FIG. 6 shows a rear view of an insert, according to an embodiment.
FIG. 7 shows a cross-sectional view of a golf club head of FIG. 6.
FIG. 8A shows a rear view of the insert, according to an embodiment.
FIG. 8B shows a rear view of the insert, according to an embodiment.
FIG. 8C shows a rear view of the insert, according to an embodiment.
FIG. 9 shows a cross-sectional view of a golf club head and insert, according to an embodiment.
FIG. 10 shows a cross-sectional view of a golf club head and insert, according to an embodiment.
FIG. 11 shows a rear view of an insert, according to an embodiment.
FIG. 12 shows a rear view of an insert, according to an embodiment.
FIG. 13 shows a rear view of an insert, according to an embodiment.
FIG. 14 shows a rear view of an insert, according to an embodiment.
FIG. 15 shows a rear view of an insert, according to an embodiment.
FIG. 16A shows a cross sectional view of the insert of FIG. 14.
FIG. 16B shows a cross sectional view of the insert of FIG. 14.
FIG. 17 shows a rear view of an insert, according to an embodiment.
FIG. 18 shows a rear view of an insert, according to an embodiment.
FIG. 19A shows a cross-sectional view of the insert of FIG. 18.
FIG. 19B shows a cross-sectional view of the insert of FIG. 18.
FIG. 20 shows a rear view of a golf club head and insert, according to an embodiment.
FIG. 21 shows a rear view of the insert of FIG. 20.
FIG. 22 shows a cross-sectional perspective view of the golf club head and insert of FIG. 20.
FIG. 23 shows a rear perspective view of the golf club head and insert of FIG. 20.
FIG. 24 shows a cross-sectional perspective view of the golf club head and insert of FIG. 20.
FIG. 25 shows a rear view of a golf club head, according to an embodiment.
FIG. 26 shows a top view of a golf club head and insert, according to an embodiment.
FIG. 27 shows a cross-sectional perspective view of the golf club head and insert of FIG. 26.
FIG. 28 shows a rear perspective view of the insert of FIG. 26.
FIG. 29 shows a control club head.
FIG. 30 depicts a bar chart illustrating the percent change in MOI of six exemplary club heads and a control club head.
FIG. 31 depicts a plot illustrating CG Heigh Vs. CG Depth of six exemplary club heads and a control club head.
FIG. 32 depicts a bar chart illustrating percent change in MOI of two exemplary club heads and a control club head.
FIG. 33 depicts a bar chart illustrating CG Height Vs. CG Depth of two exemplary embodiments and a control club head.
FIG. 34 depicts a bar chart illustrating a change in ball speed of two exemplary club heads and a control club head.
FIG. 35 depicts a bar chart illustrating a change in ball speed of two exemplary club heads and a control club head.
FIG. 36 depicts a bar chart illustrating normalized ball speed of two exemplary club heads and a control club head.
FIG. 37 depicts a bar chart illustrating a change in spin rate of two exemplary club heads relative to a control club head.
FIG. 38 depicts a bar chart illustrating a change in spin rate of two exemplary club heads relative to a control club head.
FIG. 39 depicts a bar chart illustrating a change in launch angle of two exemplary club heads relative to a control club head.
FIG. 40 depicts a bar chart illustrating a change in ball speed of two exemplary club heads and a control club head.
FIG. 41 depicts a bar chart illustrating a change in ball speed of two exemplary embodiments relative to a control club head.
FIG. 42 depicts a bar chart illustrating ball speed of two exemplary embodiments and a control club head.
FIG. 43 depicts a bar chart illustrating a change in ball speed of two exemplary club heads relative to a control club head.
FIG. 44 depicts a bar chart illustrating ball speed of two exemplary club heads and a control club head.
FIG. 45 depicts a bar chart illustrating a change in ball speed of two exemplary club heads relative to a control club head.
FIG. 46 depicts a bar chart illustrating ball speed of an exemplary club head and a control club head.
FIG. 47 depicts a bar chart illustrating spin rate of an exemplary club head and a control club head.
FIG. 48 depicts a bar chart illustrating launch angle of an exemplary club head and a control club head.
FIG. 49a depicts a chart illustrating the frequency of a control club head.
FIG. 49b depicts a chart illustrating the frequency of an exemplary club head.
FIG. 50a depicts a bar chart illustrating ball speed of an exemplary club head and a control club head.
FIG. 50b depicts a bar chart illustrating launch angle of an exemplary club head and a control club head.
FIG. 50c depicts a bar chart illustrating spin rate of an exemplary club head and a control club head.
FIG. 51a depicts a bar chart illustrating ball speed of an exemplary club head and a control club head.
FIG. 51b depicts a bar chart illustrating launch angle of an exemplary club head and a control club head.
FIG. 51c depicts a bar chart illustrating spin rate of an exemplary club head and a control club head.
FIG. 52 depicts a bar chart of the outcomes for satisfaction after a test.
FIG. 53 depicts a bar chart of the outcomes for satisfaction after a test.
FIG. 54 depicts a bar chart of the outcomes for satisfaction after a test.
FIG. 55 shows a golf club head according to an embodiment.

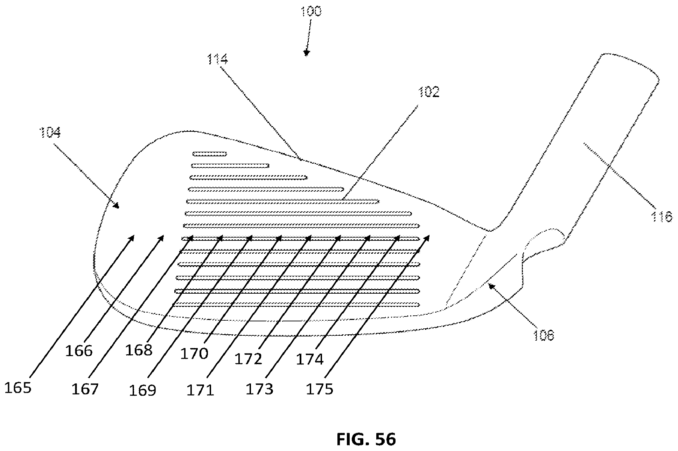

FIG. 56 shows a golf club head according to an embodiment.

### DETAILED DESCRIPTION

Described herein are various embodiments of a cavity back iron type golf club head having an insert. The cavity back iron type club head further comprises an undercut feature. The undercut feature can be an undercut formed by a perimeter wall, a lip, a rear body, or a ledge. In most embodiments, the undercut feature is formed by at least a portion of the rear surface of the strike face and a rear wall around the perimeter of the club head. The undercut feature further houses an insert.

The insert covers the rear surface of the strike face and fills most or all of an undercut. The insert can further include a variable density that varies in a heel to toe direction and/or a top to bottom direction. The insert can improve perceived sound and feel, while maintaining or improving various performance characteristics, such as ball speed and spin.

Improvements to the sound can be shown through the reduction of peak frequencies during an impact with a golf ball. Reducing the peak frequencies lowers the volume at impact so that the iron produces a softer and more satisfying sound. To reduce the peak frequencies, the insert can be placed into areas of the perimeter that experience the most vibrations, such as the top rail, or any other areas where the insert can be press fit into an undercut.

Furthermore, the insert can comprise various features to optimize mass properties, performance, and manufacturing processes. For example, in many embodiments, the insert may comprise interconnected wall that define plurality of voids, or empty space, to lower the overall mass of the insert. Accordingly, the voids can be positioned or created in such a way to adjust the overall center of gravity of club head, or to modulate stability behind the strikeface. The interconnected walls and voids can cause the insert to be more flexible, thereby improving the assembly process by allowing the insert to be easily press fit into the cavity and undercut.

In some embodiments, the insert is a single component that fills most or all of the cavity. In other embodiments, the insert may be made of multiple pieces. Dividing the insert into multiple pieces allows for easier installation of the insert into the cavity and undercut.

In some embodiments, the insert may have alignment features to allow for more accuracy of placement of the insert. The alignment features can secure the insert in the undercut to prevent any translation or sliding of the insert during use.

### Definitions

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

In many embodiments, the golf club head comprises a cavity back iron club head. In these embodiments, the golf club head comprises a rear cavity. In other embodiments, the golf club head can be other irons type club heads such that a perimeter undercut exists.

"Iron type golf club heads" as used herein comprise comprises a loft angle less than approximately 60 degrees, less than approximately 59 degrees, less than approximately 58 degrees, less than approximately 57 degrees, less than approximately 57 degrees, less than approximately 56 degrees, less than approximately 55 degrees, less than approximately 54 degrees, less than approximately 53 degrees, less than approximately 52 degrees, less than approximately 51 degrees, less than approximately 50 degrees, less than approximately 49 degrees, less than approximately 48 degrees, less than approximately 47 degrees, less than approximately 46 degrees, less than approximately 45 degrees, less than approximately 44 degrees, less than approximately 43 degrees, less than approximately 42 degrees, less than approximately 41 degrees, less than approximately 40 degrees, less than approximately 39 degrees, less than approximately 38 degrees, less than approximately 37 degrees, less than approximately 36 degrees, less than approximately 35 degrees, less than approximately 34 degrees, less than approximately 33 degrees, less than approximately 32 degrees, less than approximately 31 degrees, less than approximately 30 degrees, less than approximately 29 degrees, less than approximately 28 degrees, less than approximately 27 degrees, less than approximately 26 degrees, less than approximately 25 degrees, less than approximately 24 degrees, less than approximately 23 degrees, less than approximately 22 degrees, less than approximately 21 degrees, less than approximately 20 degrees, less than approximately 19 degrees or less than approximately 18 degrees.

Further, in other embodiments, the loft angle of the iron-type club head 100 can be 60 degrees, 59 degrees, 58 degrees, 57 degrees, 56 degrees, 55 degrees, 54 degrees, 53 degrees, 52 degrees, 51 degrees, 50 degrees, 49 degrees, 48 degrees, 47 degrees, 46 degrees, 45 degrees, 46 degrees, 45 degrees, 44 degrees, 43 degrees, 42 degrees, 41 degrees, 40 degrees, 39 degrees, 38 degrees, 37 degrees, 36 degrees, 35 degrees, 34 degrees, 33 degrees, 32 degrees, 31 degrees, 30 degrees, 29 degrees, 28 degrees, 27 degrees, 26 degrees, 25 degrees, 24 degrees, 23 degrees, 22 degrees, 21 degrees, 20 degrees, 19 degrees, 18 degrees, or 17 degrees.

For further example, in other embodiments, the loft angle of the iron-type club head can range from 17 degrees to 60 degrees. In other embodiments, the loft angle of the club head can range from 17 degrees to 40 degrees, or 40 degrees to 60 degrees. In other embodiments, the loft angle of the club head can range from 17 degrees to 35 degrees, 25 degrees to 40 degrees, 30 degrees to 45 degrees, 35 degrees to 50 degrees, 40 degrees to 55 degrees, or 45 degrees to 60 degrees. In other embodiments, the loft angle of the club head can range from 17 degrees to 30 degrees, 30 degrees to 40 degrees, 40 degrees to 50 degrees, or 50 degrees to 60 degrees.

Other features and aspects will become apparent by consideration of the following detailed description and accompanying drawings. Before any embodiments of the disclosure are explained in detail, it should be understood that the disclosure is not limited in its application to the details or embodiment and the arrangement of components as set forth in the following description or as illustrated in the drawings. The disclosure is capable of supporting other embodiments and of being practiced or of being carried out in various ways. It should be understood that the description of specific embodiments is not intended to limit the disclosure from covering all modifications, equivalents and alternatives falling within the spirit and scope of the disclosure. Also, it is to be understood that the phraseology and terminology used herein is for the purpose of description and should not be regarded as limiting.

### 1) Introduction to Invention

Described herein are various embodiments of a cavity back iron type golf club heads having an insert. In these embodiments, the iron type golf club head further comprises a rear cavity and a perimeter undercut. The insert extends into and fills a majority of the perimeter undercut.

The undercut can be formed in any region of the golf club head such as in the toe, heel, top rail, sole, rear, or any combination of the like. The undercut can be a cavity, a recess, a ledge, or any other space which can house an insert, or any combination of these features. In some embodiments, the undercut is formed by a rear wall that extends rearwardly from the perimeter of the club head. In other embodiments, the undercut is formed by a recess in the rear of club head. Further, the undercut may be formed in a portion of the perimeter. For example, the undercut can be formed in 10%-99% of the perimeter of the club head. In some embodiments, the undercut is formed in 10%-29%, 30%-49%, 50%-69%, 70%-89%, or 90%-99% of the perimeter. In other embodiments, the undercut can extend completely around the perimeter of the club head. For example, the undercut can be formed in 100% of the perimeter.

In some embodiments, the insert comprises a plurality of voids. The voids allow for a reduction in the mass of the insert. This savings in mass can be placed elsewhere in the club head to improve moment of inertia, center of gravity, or other mass properties. Further, the voids allow the insert to be compressed and press-fit into the undercut, or other feature, than can house an insert.

In some embodiments, the insert further comprises multiple pieces. Two or more pieces can form the insert. Since the insert is divided into two or more pieces, each piece is smaller and allows for easier placement into the undercut. The two or more pieces can be separate or integrally formed. The two or more pieces can comprise different materials or the same. In other embodiments, the insert can be one piece.

### 2) General Description of a Golf Club Head

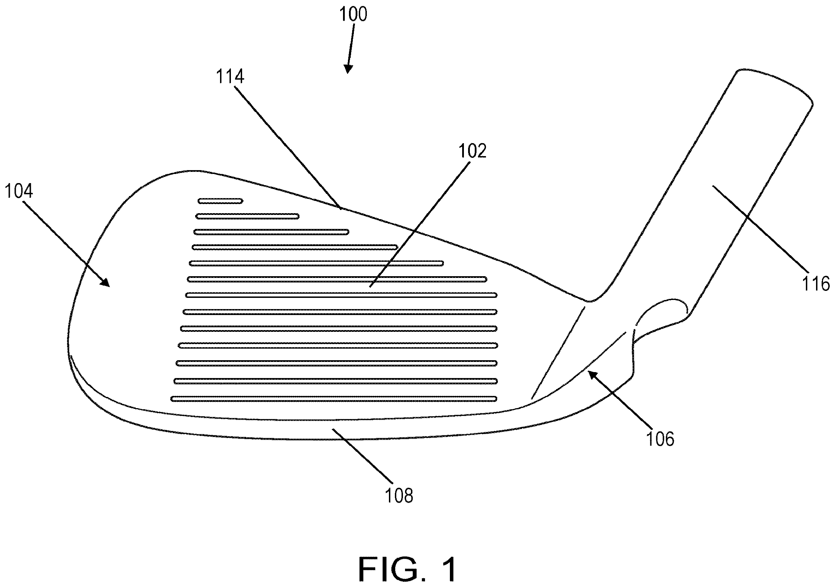

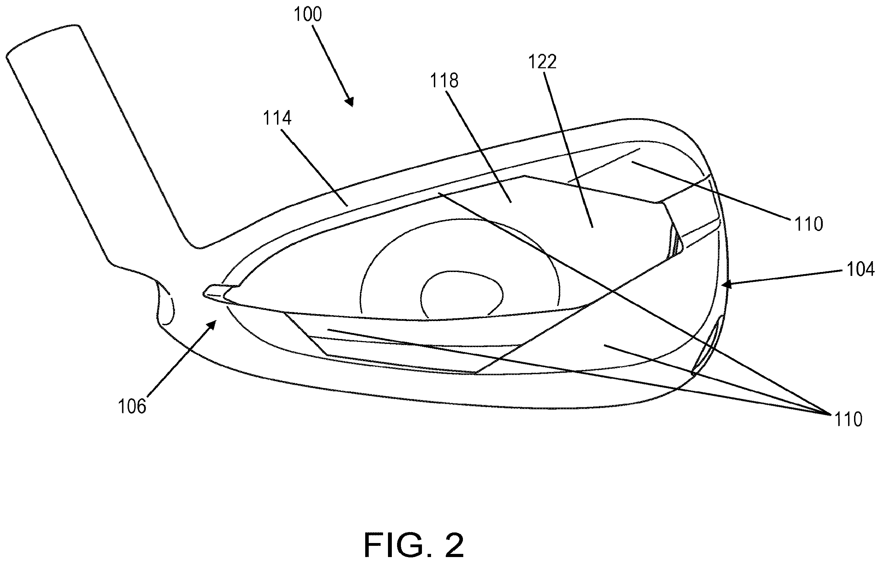

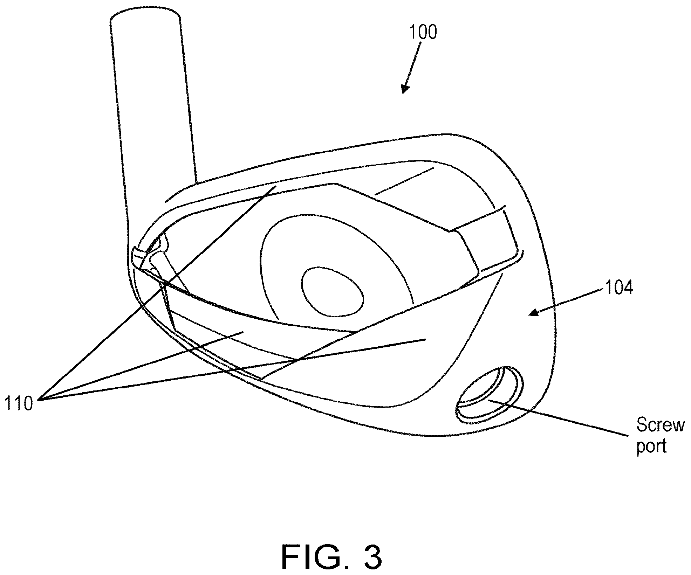

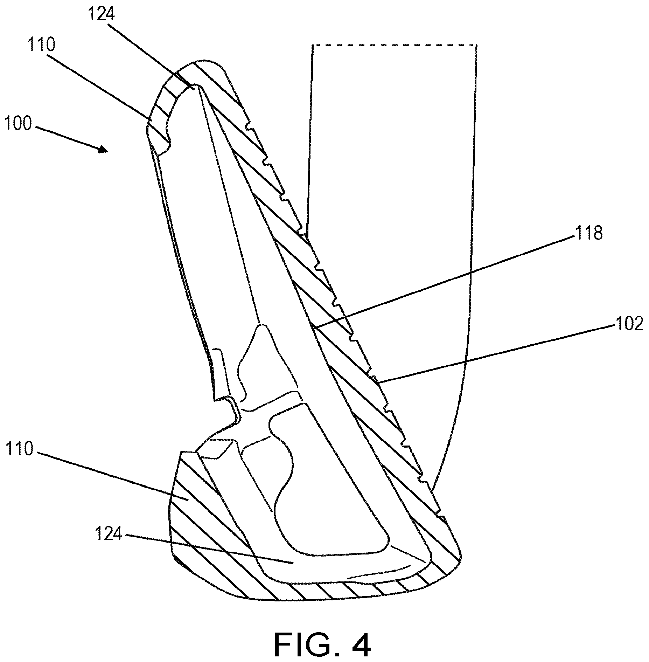

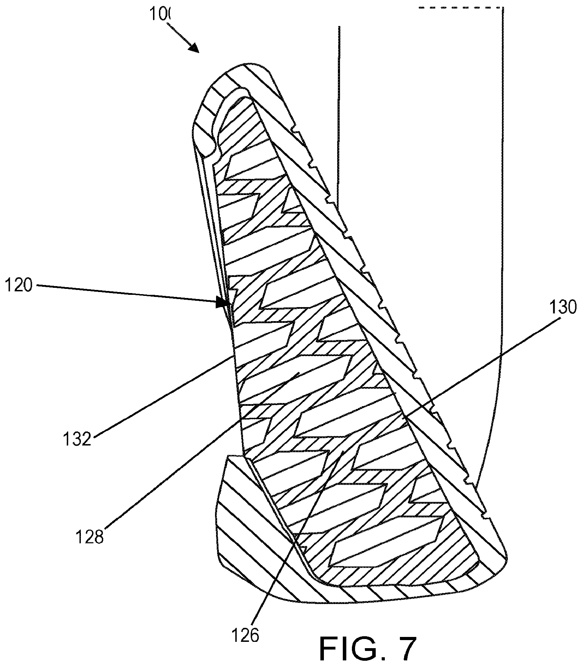

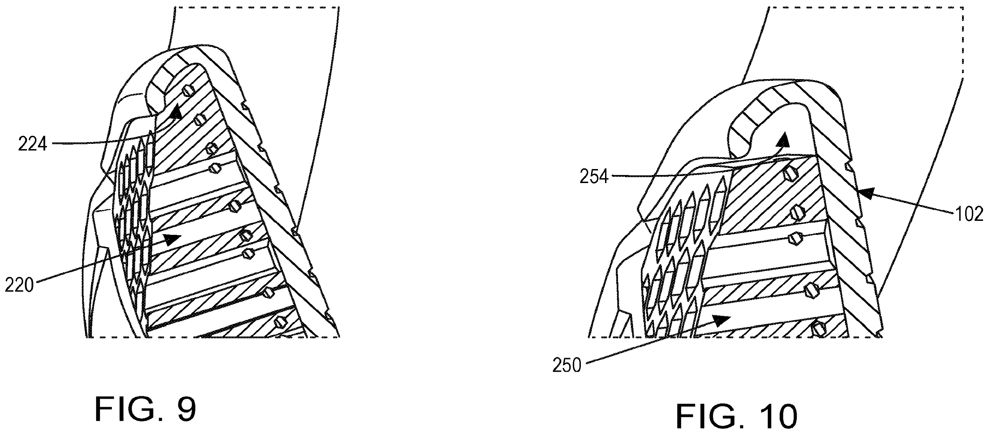

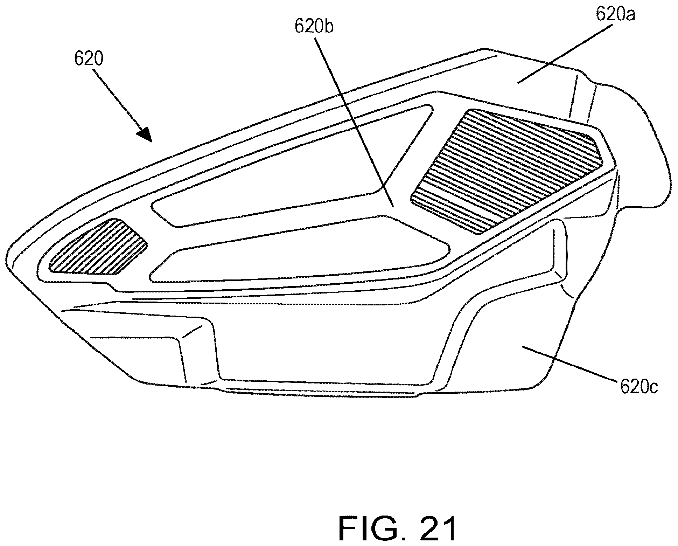

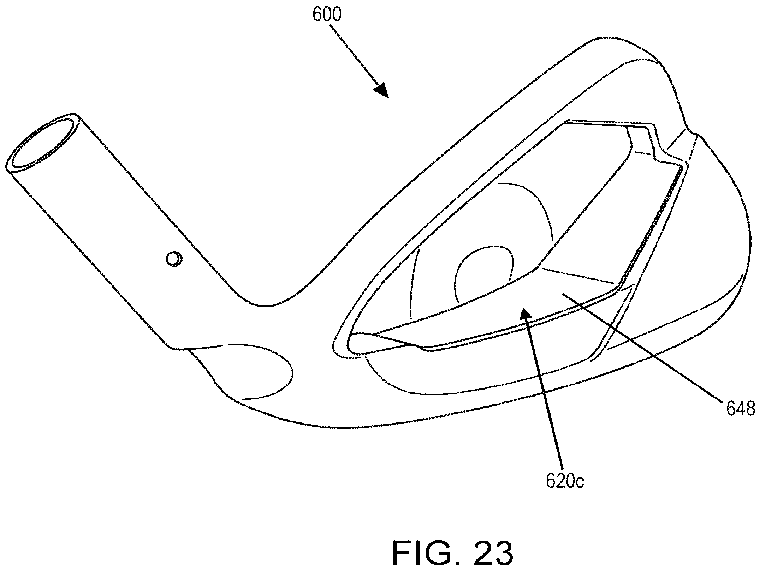

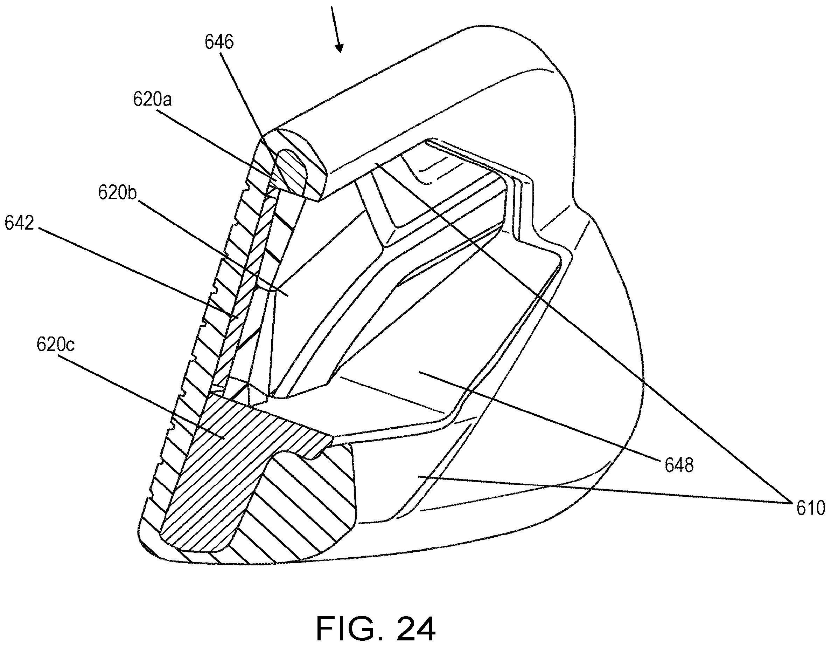

Referring to the drawings, wherein like reference numerals are used to identify like or identical components in various views, FIGS. 1-29 schematically illustrate an iron-type club head and an insert in various views. Specifically, FIG 1. illustrate a club head 100 comprising a strikeface 102, a hosel 116, a toe end 104, and heel end 106 opposite the toe end 104, a top rail 114, a sole 108 opposite the top rail 114. As illustrated in FIG. 2, the golf club head 100 further comprises a rear surface 118 opposite the stikeface 102, a rear body 110, and a rear wall 112. The rear body 110 is formed around a perimeter of the rear surface such that a cavity 122 is defined by the rear body 110 and the rear surface 118. With reference to FIG. 4, the club head 100 further comprises an undercut 124. The undercut 124 is formed by the rear body 110 and the rear surface 118.

### 3) Insert with Voids

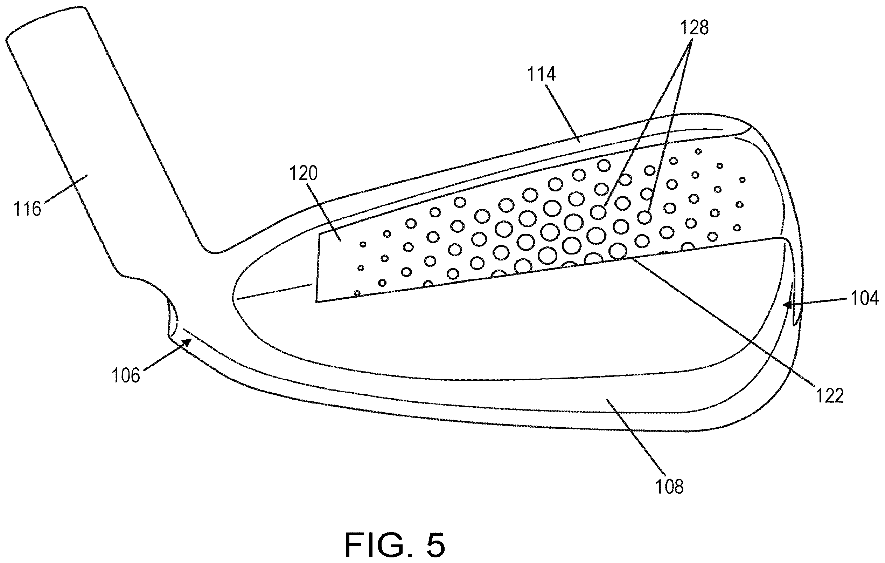

With reference to FIGS. 5-7, the golf club head 100 further comprises insert 120. The insert 120 is configured to abut the rear surface 118 and extend into a majority of the undercut 124. The insert 120 can further comprise a plurality of interconnected walls 126 that define a plurality of voids 128. The insert 120 further comprises a rear surface 132 and a front surface 130. The rear surface 132 is exposed in the cavity 122 such that it is visible from the rear of the club. The front surface 130 abuts the rear surface 118 of the strikeface 102. All of the voids 128 are open to the rear surface 132. Many or all of the voids 128 extend through the insert and are open to both the rear surface 132 and the front surface 130.

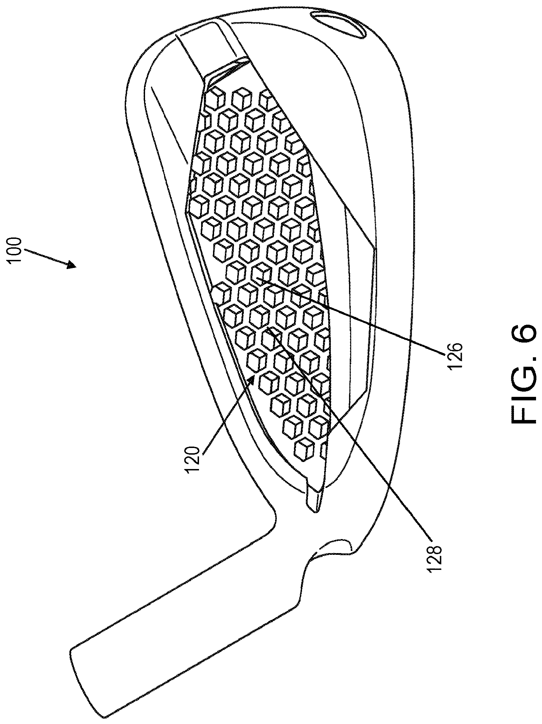

The plurality of voids 128 reduce the overall mass of the insert, allowing discretionary mass to be placed elsewhere in the club head 100. The voids can remove any desired amount mass in order to optimize the overall mass properties of the club head such as the location of the center of gravity and moment of inertia. The plurality of voids can take various shapes and sizes. For example, in some embodiments, the voids 128 can have substantially similar size and shape across the insert, as illustrated in FIG. 6. In other embodiments, the voids can have varying size across the insert. In some examples, the insert can have heel bias voids such that the voids formed in the heel of the insert are larger than the voids formed in the center and toe portions. By having larger voids in the heel, the overall center of gravity will shift towards the toe. Similarly, the insert can have toe bias voids such that the voids formed in the toe of the insert are larger than the voids formed in the center and heel portions. The larger voids in the toe of the insert shifts the overall center of gravity towards the heel. Any size or location of the voids can be chosen in order to optimize overall mass properties of the club head. The voids are formed and can be defined by interconnected walls.

The voids can also increase flexibility of the insert by giving the insert space to compress into itself when force is applied. In some embodiments, the voids extend in a generally front-to-rear direction, leading to increased compressibility in a top-to-bottom direction. The voids allow for the interconnected walls to compress into the empty space, reducing the overall size of the insert. Once pressure is released, the interconnected walls expand back to the original shape and structure. In other embodiments, the voids can twist extend in multiple directions, leading to increased compressibility in multiple directions. The increase in compressibility increases ease of installation, the methods of which are described in detail below.

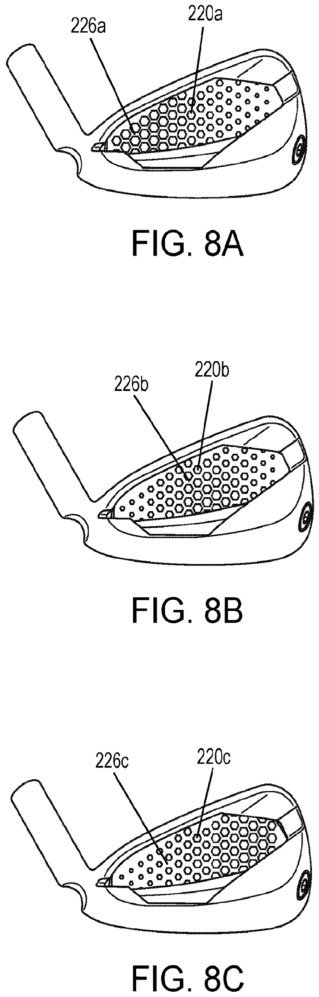

FIGS. 8a-8c, illustrate club head 200 comprising similar features as club head 100. The club heads further comprise various embodiments of insert, 220a, 220b, 220c. Insert 220a comprises a plurality of voids 226a that have a heel bias such that the voids formed in the heel are larger than the voids formed in the center and toe portions. Insert 220b comprises a plurality of voids 226b that have a center bias such that the voids are larger in the center than in the heel and toe portions. Insert 220c comprises a plurality of voids that have a toe bias such that the voids are larger than the voids in the center or heel portions.

The insert comprises a total volume and a filled volume. The total volume is the volume occupied by the insert, more specifically, bounded by a surface that is defined by the perimeter-most points of the insert. The total volume can include empty space, or voids. The total volume can be between 0 cubic inches and 4 cubic inches. The total volume can cover between 20% to 100% of the total cavity volume, including the undercut.

The filled volume is the volume that is occupied by the interconnected walls of the insert (I.e. not including empty space). The filled volume can be approximately 5% to 90% of the total volume. In other words, the interconnected walls can occupy approximately 5% to 90% of the total volume. In some embodiments, the filled volume can be approximately 20% to 80%, 30% to 70%, 40% to 60%, 5% to 15%, 5% to 20%, 5% to 30%, 5% to 40%, 5% to 50%, or 45% to 75% of the total volume.

### 4) Insert with Top rail or No Top Rail

In some embodiments, the golf club head 200, comprising many aspects of the golf club head 100 described above, can further include an insert 220 as described below. In this embodiment, the insert 220 comprises a top rail portion that extends into at least an upper portion of the undercut 224 of the club head 200. In this embodiment, the insert fills approximately 85% to 98% of the top rail undercut. For example, the insert can fill 85%, 86%, 87%, 88%, 89%, 90%, 91%, 92%, 93%, 94%, 95%, 96%, 97%, or 98% of the top rail undercut. In some embodiments, the portion of the top rail insert is approximately 10% to 20% of the total volume of the insert. For example, the top rail portion of the insert is 10%, 11%, 12%, 13%, 14%, 15%, 16%, 17%, 18%, 19%, or 20% of the total volume of the insert. Furthermore, the insert comprises a solid top rail portion such that there are no voids or empty spaces in the top rail portion.

In other embodiments, the golf club head 200 comprises an insert 220. In this embodiment, insert 220 lacks a top rail portion such that the insert does not extend into the upper portion of the undercut. In this embodiment, the insert 220 fills approximately 0% of the top rail undercut. The insert 220 may extend into other portions of the undercut such as a heel portion, toe portion, or sole portion.

Inserts described herein may comprise a top rail portion or lack a top rail portion of the insert as mentioned above. The choice of a top rail portion or lack of top rail portion can be made based upon achieving desired mass properties, sound damping, or manufacturability.

### 5) Various Structures of Voids and Interconnected Walls

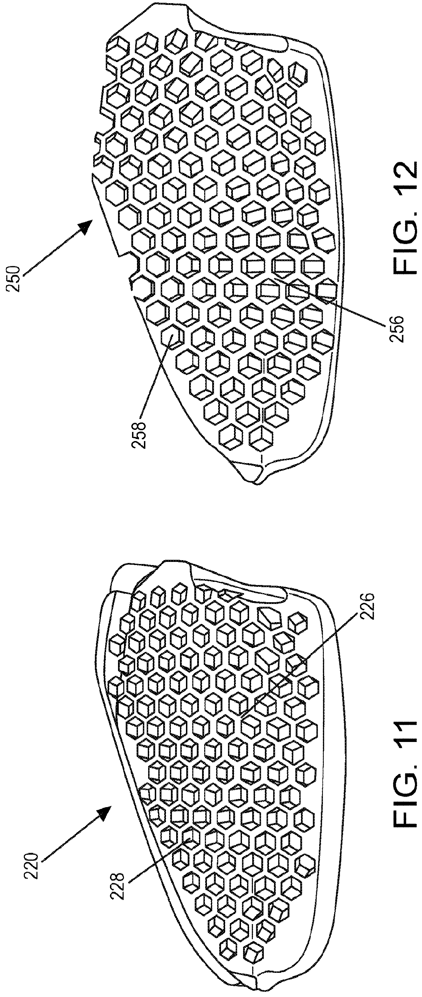

With reference to FIGS. 11-19, and as mentioned above, the inserts can have interconnected walls. The interconnected walls define a plurality of voids. The voids are empty space within the volume of the insert and between the interconnected walls. The voids can be asymmetric or symmetric. The voids can have a repeating pattern throughout the insert. Similarly, the interconnected walls can be asymmetric or symmetric. The interconnected walls can have a repeating pattern throughout. The interconnected walls can form one continuous structure such that all the interconnected walls are connected to each other. The interconnected walls are made up of a solid material. The interconnected walls can be formed in any shape, size, pattern, or structure without departing from the invention.

The interconnected walls form various geometric structures including, but not limited to, as follows simple cubic, body centered cubic, face centered cubic, column, columns, diamond, fluorite, octet, truncated cube, truncated octahedron, kelvin cell, IsoTruss, gyroid, lattice, re-entrant, weaire-phelan, triangular honeycomb, triangular honeycomb rotated, hexagonal honeycomb, re-entrant honeycomb, square honeycomb rotate, square honeycomb, face centered cubic foam, body centered cubic foam, simple cubic foam, hex prism diamond, hex prism edge, hex prism vertex centroid, hex prism central axis edge, hex prism laves phase, tet oct vertex centroid, or oct vertex centroid.

The various structures, used in the insert and embodiments described below, help achieve specific and unique mass properties by arranging the voids in varying manners. Further, the structures allow for different degrees of compressibility. For example, an insert with a hexagonal structure will have more compressibility in a top-to-bottom direction than an insert with a gyroid structure. The shape of the voids and the relative positions of the interconnected walls affect the way in which the insert compresses.

### 6) Insert with Hexagonal Structure and Top Rail

As illustrated in FIG. 11, an insert 220 comprises interconnected walls 226 and voids 228. In this embodiment, the voids are uniform in size. The voids 228 take the shape of a two-dimensional hexagon. The voids 228 are apertures that extend through the insert in a general front to rear direction. In this embodiment, the voids 228 extend through the front and rear surface of the insert. The insert 220 further comprises a top rail portion that extends into the top rail undercut. The portion of the top rail insert is approximately 10% to 20% of the total volume of the insert. For example, the top rail portion of the insert is 10%, 11%, 12%, 13%, 14%, 15%, 16%, 17%, 18%, 19%, or 20% of the total volume of the insert. Furthermore, the insert comprises a solid top rail portion such that there are no voids or empty spaces in the top rail portion.

### 7) Insert with Hexagonal Structure and No Top Rail

FIG. 12 illustrates an insert 250 that is similar to insert 220. Insert 250 comprises interconnected walls 256 and voids 258. In this embodiment, the voids are uniform in size. The voids 256 take the shape of a hexagon. The voids 258 are apertures that extend through the insert in a general front to rear direction. In this embodiment, the voids 258 extend through the front and rear surface of the insert. In this embodiment, the insert 250 lacks a top rail portion.

### 8) Insert with Lattice Structure and No Top Rail

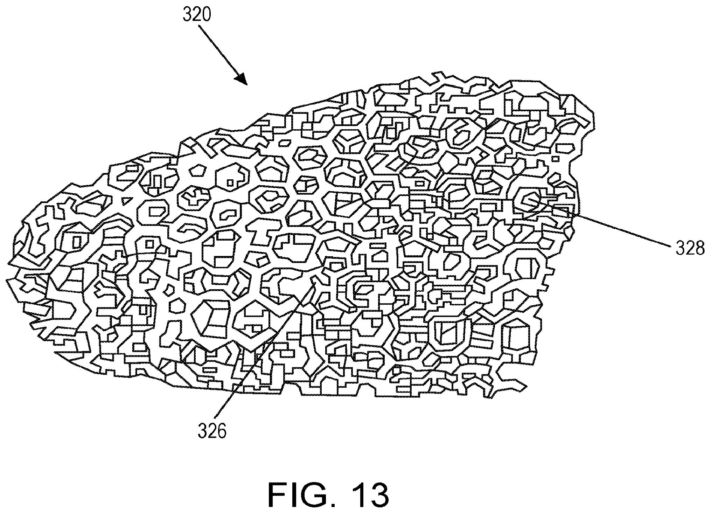

FIG. 13 illustrates an insert 320. In this embodiment, the insert 320 comprises a plurality of interconnected walls 326 and a plurality of voids 328. The interconnected walls form a general lattice structure which form a plurality of voids that take the general shape of a three-dimensional hexagonal cell. In this embodiment, the voids 328 are arranged in a staggered, repeating pattern. In this embodiment, the interconnected walls extend into the top rail portion. Furthermore, in this embodiment, the insert does not comprise a solid top rail portion.

### 9) Insert with Gyroid Structure and Top Rail

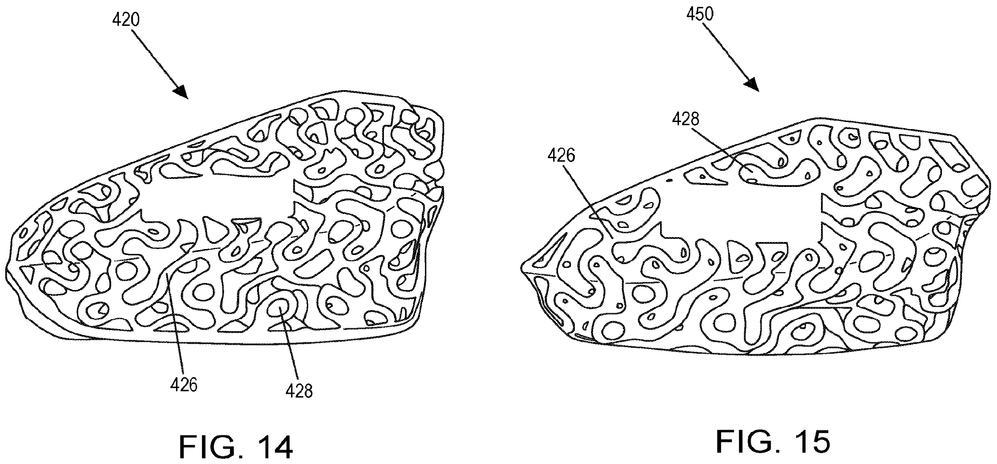

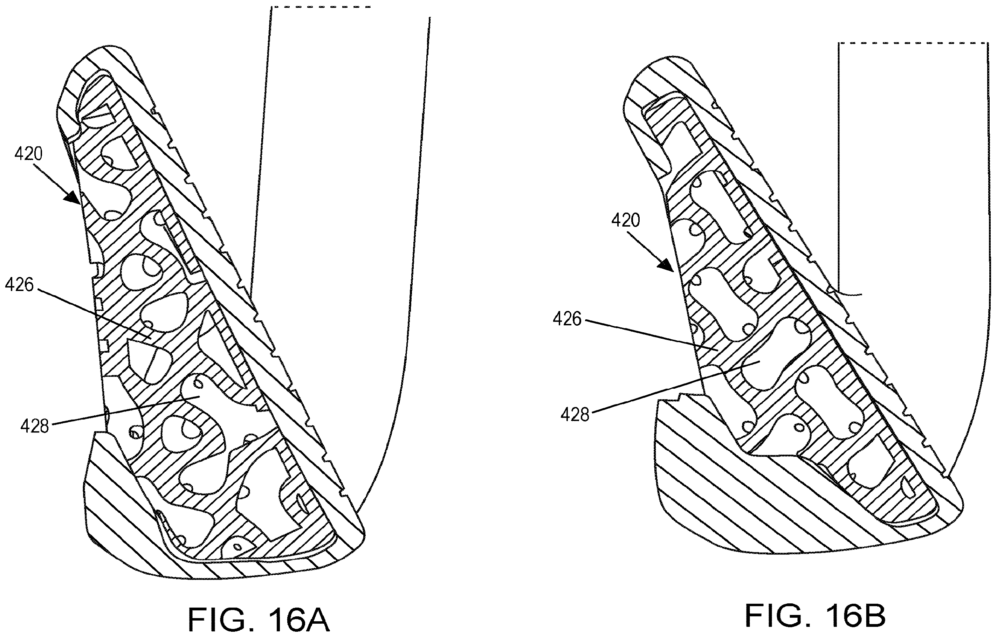

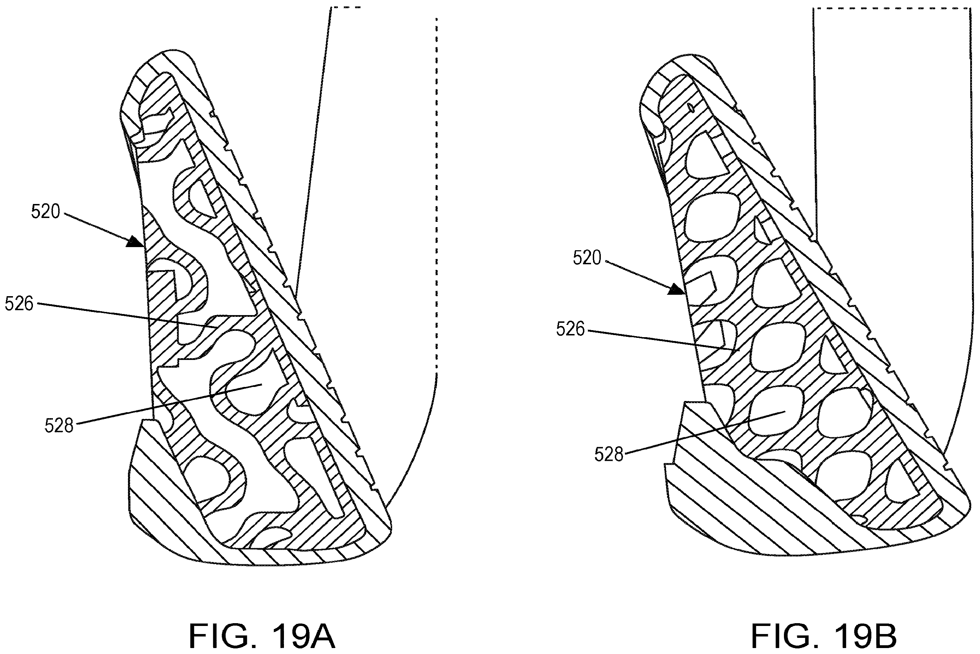

FIG. 14 illustrates an insert 420. In this embodiment, the insert 420 comprises a plurality of interconnected walls 426 and a plurality of voids 428. The interconnected walls 426 take a gyroid structure. The interconnected walls 426 in the gyroid structure are non-linear such that the interconnected walls 426 twist/bend in three dimensions throughout the insert. FIGS. 16a and 16b further show insert 420. FIG. 19a shows a cross section of the insert 420 at one location and FIG. 16b shows a cross section of the insert 420 at a different location. FIG 16a and 16b illustrates the various cross-sectional shapes of the voids and overall structure of the interconnected walls. The voids 428 take a shape of a repeating pattern. In this embodiment, the insert 420 comprises a solid top rail portion. The portion of the top rail insert is approximately 10% to 20% of the total volume of the insert. For example, the top rail portion of the insert is 10%, 11%, 12%, 13%, 14%, 15%, 16%, 17%, 18%, 19%, or 20% of the total volume of the insert. Furthermore, the insert comprises a solid top rail portion such that there are no voids or empty spaces in the top rail portion.

### 10) Insert with Gyroid Structure and No Top Rail

FIG. 15 illustrates an insert 450 that is similar to insert 420. The insert 450 comprises a plurality of interconnected walls 456 and a plurality of voids 458. The interconnected walls 456 take a gyroid structure, similar to insert 420. The insert 450 lacks a top rail portion.

### 11) Insert with Diamond Structure and Top Rail

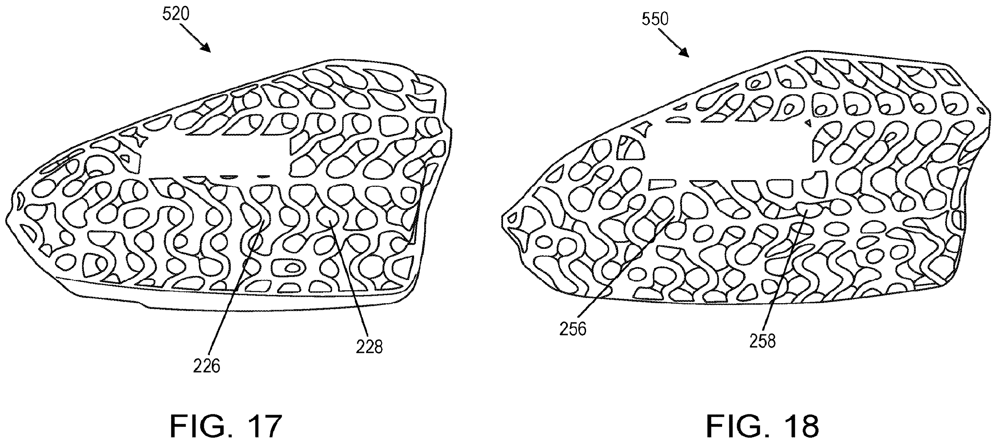

FIG. 17 illustrates an insert 520. In this embodiment, the insert 520 comprises a plurality of interconnected walls 526 and a plurality of voids 528. The interconnected walls 526 take a diamond structure. FIGS. 19a and 19b further show insert 520. Fig 19a shows a cross section of the insert 520 at one location and FIG. 19b shows a cross section of the insert 520 at a different location. FIG 19a and 19b illustrate the various cross-sectional shapes of the voids and overall structure of the interconnected walls. The portion of the top rail insert is approximately 10% to 20% of the total volume of the insert. For example, the top rail portion of the insert is 10%, 11%, 12%, 13%, 14%, 15%, 16%, 17%, 18%, 19%, or 20% of the total volume of the insert. Furthermore, the insert comprises a solid top rail portion such that there are no voids or empty spaces in the top rail portion.

### 12) Multi-piece inserts

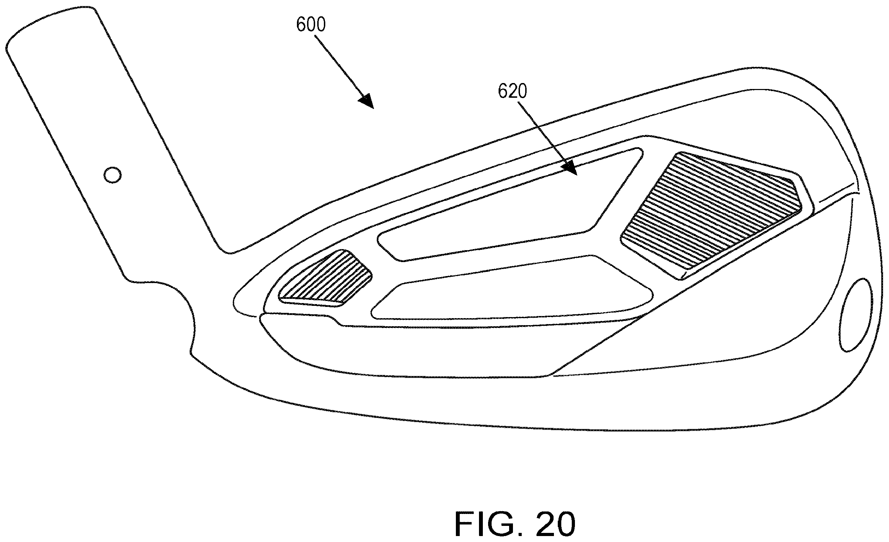

With reference to FIGS. 20-25, in some embodiments, the insert can made up of multiple pieces according to aspects of this invention. The insert can be made up of 2, 3, 4, 5 or more pieces. Each of the multiple pieces form a part of the whole insert. The multiple pieces can be divided in any manner to allow easier placement of the insert into the cavity and undercut of the club head. The multiple pieces may be formed together prior to the insert being placed in the cavity or may be placed in the cavity separately from each piece.

Referring to FIG. 20, the multi-piece insert 620 is divided into an upper undercut gasket 620a, a central portion 620b, and a lower undercut gasket 620c. The upper and lower undercut gaskets 620a, 620b are configured to fit within the undercut portion of the rear body 610. In this embodiment, the upper undercut gasket 620a, and the lower undercut gasket 620c are integrally formed with one another, but are separate from the central portion 620b. In other embodiments, the upper undercut gasket and lower undercut gasket are separate pieces such that they are not integrally formed. The central portion is configured to fit between the upper undercut gasket 620a and the lower undercut gasket 620c. When installed, the central portion 620b abuts both the upper undercut gasket 620a and the lower undercut gasket 620c.

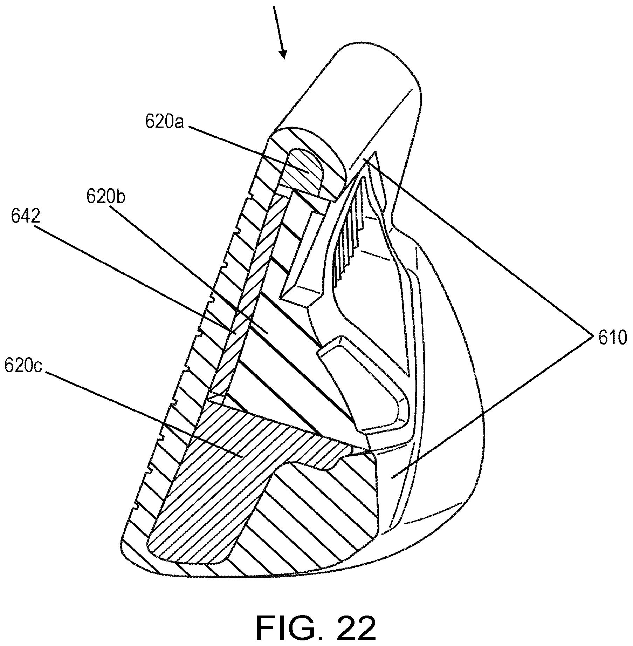

As illustrated in FIG. 22, the central portion 620b comprises an adhesive layer 642 and a badge layer 644. The badge layer can improve the overall aesthetics of the club head. The adhesive layer 642 provides a mean to secure the central portion 620b to the rear surface 618 of the club head. In some embodiments, the central portion can lay flush with the rear body. In other embodiments, the central portion can be offset from the rear body.

In other embodiments, the insert can comprise 2 or more pieces. For example, the insert can comprise 3, 4, 5, 6, or more pieces. The pieces can be arranged in any manner according to aspects of this invention.

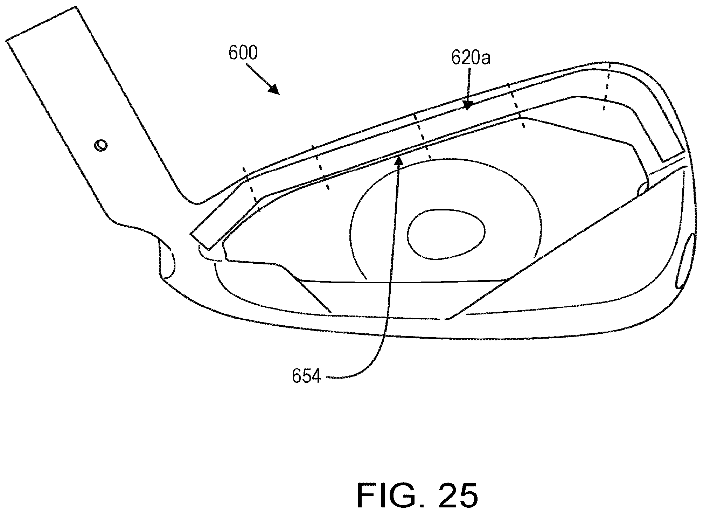

In the exemplary embodiment illustrated in FIG. 25, the top rail portion 620a is divided into 6 pieces. Each piece fills a portion of the top rail undercut. In this embodiment, the pieces are approximately the same size. In other embodiments, the pieces can take any size. The pieces can range from approximately 0.25 inches to .75 inches wide.

The upper undercut gasket can comprise a top surface and a bottom surface. The central portion comprises a top and a bottom. The lower undercut gasket can comprise a top surface and a bottom surface. As mentioned above, the central portion is configured to abut each of the upper and lower undercut gaskets. The top of the central portion abuts the bottom surface of the upper undercut gasket. Further, the bottom of the central portion abuts the top surface of the lower undercut gasket. The central portion further secures the upper undercut gasket and lower undercut gasket within the undercut.

The mass of the undercut piece can range from .2 grams to 10 grams. For example, the insert can range from .2 grams to 1 gram, 1 gram to 2 grams, 2 grams to 3 grams, 3 grams to 4 grams, 5 grams to 6 grams, 6 grams to 7 grams, 7 grams to 8 grams, 8 grams to 9 grams, 9 grams to 10 grams. In some embodiments, the mass can be .2 grams, 1 gram, 2 grams, 3 grams, 4 grams, 5 grams, 6 grams, 7 grams, 8 grams, 9 grams, or 10 grams.

The mass of the central portion can range from .2 grams to 10 grams. For example, the insert can range from .2 grams to 1 gram, 1 gram to 2 grams, 2 grams to 3 grams, 3 grams to 4 grams, 5 grams to 6 grams, 6 grams to 7 grams, 7 grams to 8 grams, 8 grams to 9 grams, 9 grams to 10 grams. In some embodiments, the mass can be .2 grams, 1 gram, 2 grams, 3 grams, 4 grams, 5 grams, 6 grams, 7 grams, 8 grams, 9 grams, or 10 grams.

In preferred embodiments, the undercut gasket piece can be formed from a low-density material such as foam, plastic, or polymer. Furthermore, the undercut gasket pieces can be made from a softer material to allow for elastic compression and expansion such that the undercut gasket piece can compressed and placed in the undercut then expand to fill the undercut.

Each of the upper undercut gasket and the lower undercut gasket can create a seal that prevents water and debris from entering the undercut. As mentioned above, the expansion of the undercut gasket when placed in the undercut will seal off the undercut. Water and debris will be unable to enter the undercut and thus unwanted rattling noise and vibrations will be prevented.

The badge layer provides a layer of material to enhance the overall appearance of the club head so that it is aesthetically pleasing to the user. The badger layer follows the contours of the rear surface of the insert. In some embodiments, the badge layer is a single continuous layer that covers the entire rear surface of the insert. In other embodiments, the badge layer covers a portion of the rear surface of the insert. The badge layer can be a single continuous piece or comprise several pieces to create any desired appearance. In some embodiments, the badge layer is made up of a thin metal material such as aluminum. The metal layer can be coated or colored to change the overall appearance of the layer. In other embodiments, the badge layer can be made of other materials such has a polymer, ceramic, or plastic.

The adhesive layer secures the central portion of the insert to the rear surface of the strikeface. The adhesive layer can be formed from a tape or liquid. The tape can be a double-sided tape that attaches to both the rear surface of the strike face and the front surface of the central portion. A liquid adhesive can be applied to the rear surface of the strikeface or the front surface of the central portion prior to the central portion being inserted. The liquid adhesive then cures, securing the central portion to the rear surface of the strikeface. The adhesive layer can comprise a mass ranging from .1 to 3 grams. For example, the adhesive layer can be .1 gram, .75 grams, 1 gram, 1.5 grams, 2 grams, 2.5 grams, or 3 grams. Furthermore, the adhesive layer can be applied between the badge layer and central portion to further secure the badge layer to the central portion.

### 13) Alignment Features

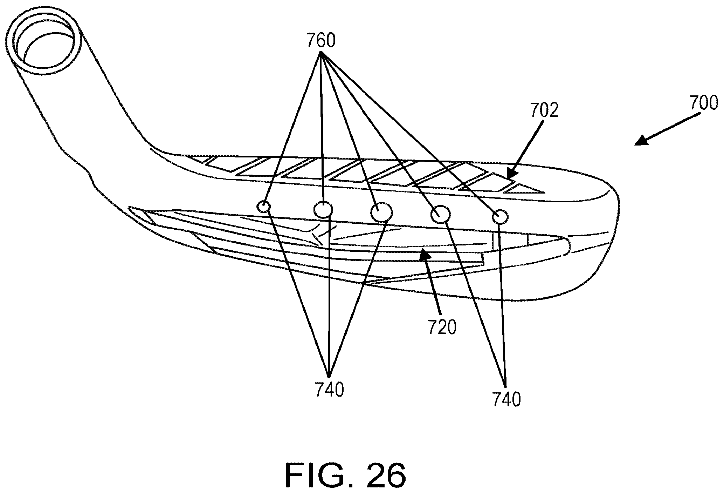

In some embodiments, referring to FIGS. 26-28, the golf club head 700, comprising many aspects of the golf club head 100 described above, can further include alignment features 762 as described below. The golf club head 700 can comprise any one of the inserts 120, 220, 320, 420, 520, and 620 described above. The alignment features can allow for more accurate placement of the insert within the undercut. Further, the alignment features secure the insert within the cavity and undercut to prevent any sliding or translation of the insert during use. In the embodiment illustrated in FIGS. 26-28, the alignment features are in the form of apertures in the top rail portion of the club head 700. In other embodiments, the alignment features can be through holes, ribs, protrusions, or any other well-known geometry. In these and other embodiments, alignment features can be at any portion of the club head that contacts the insert. The insert further comprises complementary geometry to the alignment features

FIG. 26 illustrates a golf club head 700 comprising top rail alignment features 740. In this embodiment, the top rail alignment features 740 are a plurality of circular apertures extending through the top rail. In this embodiment, there are 5 circular apertures that have varying size.

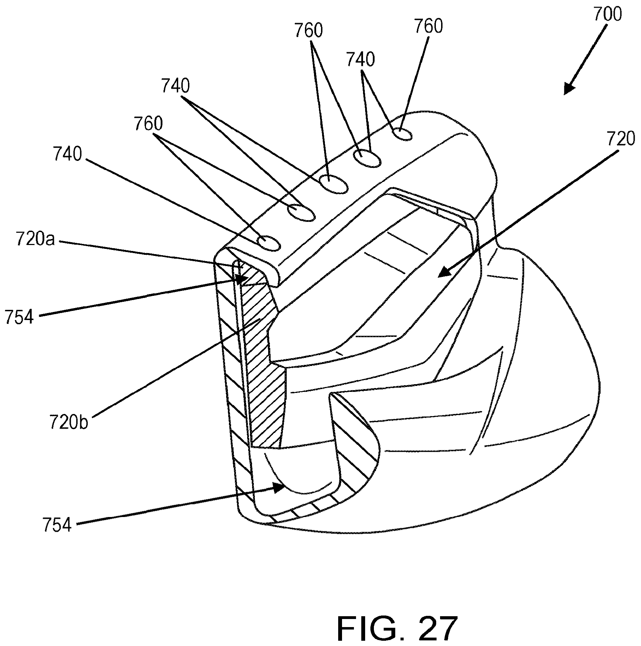

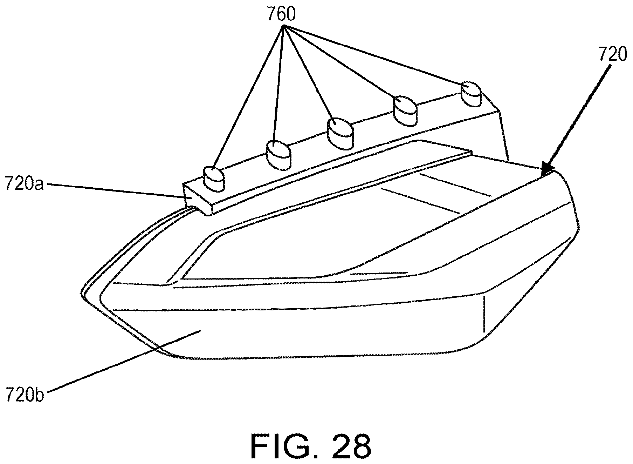

FIG. 27 and 28 further illustrate insert 720. Insert 720 comprises a multi piece construction according to aspects of this invention. The insert 720 comprises an upper undercut gasket 720a, a central portion 720b, and a lower undercut gasket 720c. The upper undercut gasket 720a further comprises top rail protrusions configured to fill the top rail alignment features 740. As mentioned above, the alignment features allow for accurate placement of the undercut gasket within the undercut. Furthermore, the alignment features offer visual aid to the user to align the ball at address.

Any combination of features described herein can be used in an insert to provide improvements to sound and feel while maintaining performance.

### 14) Materials

In some embodiments, the faceplate can comprise a faceplate material of a first density. The body can comprise a body material of a second density. The insert can comprise an insert material of a third density. The third density can be less than the first density and/or the second density. In some embodiments, the faceplate can be the same material as the body (and thereby the same densities). In some embodiments, the insert can comprise two or more materials wherein the materials are a different density over each other, and can be different or the same over the materials of the faceplate and/or the body.

The body may comprise a body material, such as steel, a steel alloy, or any other suitable material. The body material can comprise a material selected from the group consisting of a steel-based material or a steel alloy. In some embodiments, the body material can be 8620 carbon steel, which comprises iron and approximately 0.17-0.23 % wt. carbon, 0.15-0.35 % wt. silicon, 0.60-0.90 % wt. manganese, 0.15-0.30 % wt. molybdenum, 0.40-0.70 % wt. nickel, 0.40-0.65 % wt. chromium, 0.040 % wt. phosphorus, and trace amounts of other elements. In some embodiments, the body material can be 300 grade steel, which comprises iron and approximately 18-19 % wt. nickel, 8.5-9.5 % wt. cobalt, 4.6-5.2 % wt. molybdenum, 0.5-0.8 % wt. titanium, 0.05-0.15 % wt. aluminum, and trace amounts of other elements. In some embodiments, the body material can be maraging steel, which comprises iron and approximately 17-19 % wt. nickel, 8-12.5 % wt. cobalt, 3.0-5.2 % wt. molybdenum, 0.15-1.6 % wt. titanium, 0.05-0.15 % wt. aluminum, and trace amounts of other elements. The density of the body 110 material can range between 7.70 and 8.10 grams per cubic centimeter (hereafter "g/cc"). In some embodiments, the density of the body material can be 7.70 g/cc, 7.75 g/cc, 7.80 g/cc, 7.85 g/cc, 7.90 g/cc, 7.95 g/cc, 8.05 g/cc, or 8.10 g/cc. In one embodiment, the density of the body material is 7.85 g/cc.

The insert can comprise an insert material, such as a polymer matrix composite. The polymer matrix composite can comprise a glass-filled elastomer, a stainless steel-filled elastomer, a tungsten-filled elastomer, a thermoplastic polyurethane (TPU) composite, a thermoplastic elastomer (TPE) composite, or any other elastomer matrix composite, a Kevlar^{®} (aramid) fiber-reinforced polymer, a carbon-fiber reinforced polymer, rubber, ethylene-vinyl acetate foam, polymer-based foam, any combination of a suitable resin and a suitable reinforcing fiber, or any combination of the above materials.

The density of the insert can range between 1.0 and 12.0 g/cc. The density of the insert can range between 1.0 g/cc and 5.0 g/cc. In some embodiments, the density of the insert can be 1.0 g/cc, 1.5 g/cc, 2.0 g/cc, 2.5 g/cc, 3.0 g/cc, 3.5 g/cc, 4.0 g/cc, 4.5 g/cc, or 5.0 g/cc. When the density of the insert is low, a central portion of the club head that houses the insert is lighter, allowing weight to be redistributed to the periphery of the club head. The redistributed weight increases the forgiveness of the club head.

The durometer of the insert can range between 20A to 90A on the shore A hardness scale. In some embodiments, the durometer is 20A, 25A, 30A, 35A, 40A, 45A, 50A, 55A, 60A, 65A, 70A, 75A, 80A, 85A, or 90A. A lower durometer characterizes a softer material. A softer material is preferred to allow for compressibility of the insert to be placed within the undercut. Furthermore, a softer material has better vibrational damping capabilities than a harder material.

The faceplate material can be a steel-based material, a titanium-based material, a titanium alloy, or any combination thereof. The steel-based material can be a carbon steel, a 17-4 PH stainless steel, 431, 455, 475, C300, a maraging steel, or other types of stainless steel. The titanium alloy can be Ti-7S+ (ST721), Ti-9S, Ti-6-4, Ti-15-3-3-3, or any other suitable titanium alloy. The titanium alloy may be an α-β titanium alloy. In embodiments where the faceplate is a titanium-based material, an aluminum alloy, a titanium alloy, or any combination thereof, the density of the faceplate material can range between 2.6 and 8.7 g/cc. In some embodiments, the density of the faceplate material can be 2.6 g/cc, 2.8 g/cc, 3.0 g/cc, 3.2 g/cc, 3.4 g/cc, 3.6 g/cc, 3.8 g/cc, 4.0 g/cc, 4.2 g/cc, 4.4 g/cc, 4.6 g/cc, 4.8 g/cc, 5.0 g/cc, 5.2 g/cc, 5.4 g/cc, 5.6 g/cc, 5.8 g/cc, 6.0 g/cc, 6.2 g/cc, 6.4 g/cc, 6.6 g/cc, 6.8 g/cc, 7.0 g/cc, 7.2 g/cc, 7.4 g/cc, 7.6 g/cc, 7.8 g/cc, 8.0 g/cc, 8.2 g/cc, 8.4 g/cc, 8.6 g/cc, or 8.7 g/cc. In embodiments where the faceplate is a steel-based material, the density of the faceplate material can range between 7.7 g/cc and 8.1 g/cc.

### 15) Method of Manufacturing

To form the first and second embodiments, the golf club head body can be cast from a metal material, such as stainless steel. The body can be cast to have a front opening for receiving the faceplate. The faceplate can be cast or forged. The faceplate can be machined as necessary to include grooves or other face texture features. The insert can be injection molded from a thermoplastic composite (hereafter "TPC") or created through additive manufacturing. The insert can then be placed within the body by sliding the insert into the cavity through the front opening. In some embodiments, the insert can be secured into the cavity using an adhesive. In some embodiments, ultra-high density tape can be used to further secure the insert into the cavity and to prevent rattling. After the insert is seated in the cavity, the faceplate can be placed in the front opening and swagged (also called "swedged") onto the body. The faceplate cannot be not welded onto the body because the heat from welding would melt the insert. However, the swagging process does not require high heat, and thus can be conducted without harming the insert.

To form the third embodiment, the golf club head body is cast, such that it includes a face of the golf club head at the front. The golf club head body is cast from a metal material, such as stainless steel. The face of the body can be machined as necessary to include grooves or other face texture features. The body can be cast to have a toe opening for receiving the insert. The insert can be formed in a manner similar to the means used for the first and second embodiments. The insert can be shaped with contours that allow it to slide into the cavity through the toe opening of the body. The insert can be secured and bonded into the cavity by an adhesive. In some embodiments, ultra-high density tape can be used to further secure the insert into the cavity and to prevent rattling. The golf club head can be polished, painted, and finished as necessary.

As the rules to golf may change from time to time (e.g., new regulations may be adopted or old rules may be eliminated or modified by golf standard organizations and/or governing bodies), golf equipment related to the methods, apparatus, and/or articles of manufacture described herein may be conforming or non-conforming to the rules of golf at any particular time. Accordingly, golf equipment related to the methods, apparatus, and/or articles of manufacture described herein may be advertised, offered for sale, and/or sold as conforming or non-conforming golf equipment. The methods, apparatus, and/or articles of manufacture described herein are not limited in this regard.

Although a particular order of actions is described above, these actions may be performed in other temporal sequences. For example, two or more actions described above may be performed sequentially, concurrently, or simultaneously. Alternatively, two or more actions may be performed in reversed order. Further, one or more actions described above may not be performed at all. The apparatus, methods, and articles of manufacture described herein are not limited in this regard.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

### Examples

**Table 1**

| | **Insert Aperture Shape** | **Variable Density Bias** | **Insert Top Rail Fill** | **Insert Material(s)** |
|---|---|---|---|---|
| **Control Club Head** | None | N/A | No | ABS, Al |
| **Exemplary Club Head 1** | Hexagon | None | No | EPU 40 |
| **Exemplary Club Head 2** | Hexagon | None | Yes | EPU 40 |
| **Exemplary Club Head 3** | Gyroid | None | No | EPU 40 |
| **Exemplary Club Head 4** | Gyroid | None | Yes | EPU 40 |
| **Exemplary Club Head 5** | Diamond | None | No | EPU 41 |
| **Exemplary Club Head 6** | Diamond | None | Yes | EPU 42 |
| **Exemplary Club Head 7** | Hexagon | Heel | No | EPU 43 |
| **Exemplary Club Head 8** | Hexagon | Toe | Yes | EPU 44 |

The examples detailed below compare multiple combinations of the exemplary club heads described in Table 1 above.

### I. Comparison Between Club Head Described Herein With Inserts Having Top Rail Fill Or No Top Rail Fill and Control Club Head With Solid, Partial Fill Inserts

Example I illustrates comparative results related to CG location and MOI between six exemplary embodiments, according to the present invention, and a control club head. Described herein is a first exemplary golf club head, a second exemplary golf club head, a third exemplary golf club head, a fourth exemplary golf club head, and a fifth exemplary golf club head, each having similar dimensions (length, width, height, depth, etc.) as golf club head 100.

Each of the first, second, third, fourth, fifth, and sixth exemplary club heads each comprises a similar volume, mass, crown thickness, face thickness, and body structure as the club head 100. The first exemplary club head and the second exemplary club head both comprise inserts with the hexagonal structure, as described above in club head 200, and shown in FIG. 6. The first exemplary club head comprises a first insert having the hexagonal structure with no top rail fill portion. The second exemplary club head comprises a second insert having the hexagonal structure with a top rail fill portion.

Similarly, the third and fourth exemplary embodiments both comprise inserts with the gyroid structure, as described above in club head 400. The third exemplary embodiment comprises a third insert that does not have a top rail fill while the fourth exemplary embodiment comprises a fourth insert that has a top rail fill.

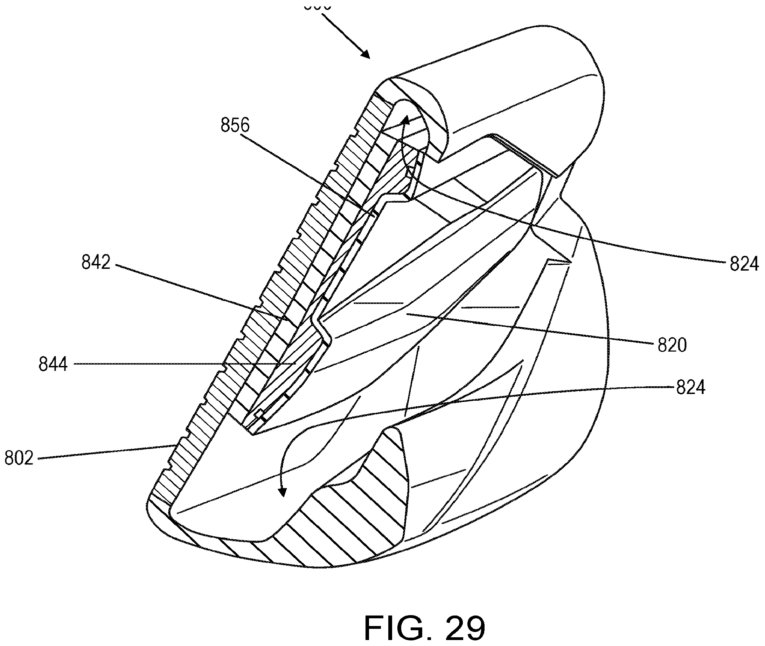

Similarly still, the fifth and sixth exemplary embodiments both comprise inserts with the diamond structure, as described above in club head 500. The fifth exemplary embodiment insert comprises a fifth insert that does not have a top rail fill while the sixth exemplary embodiment comprises a sixth insert that has a top rail fill. The control club head comprises a solid insert that does not extend into the perimeter undercut as illustrated in FIG. 29.

The first, second, third, fourth, fifth, and sixth exemplary club heads, as described above, were compared to a control club head, shown in FIG. 29, wherein the control club head comprises a similar volume, mass, crown thickness, face thickness, and body structure as the club head 100. The control club head comprises the same body structure as both the first and second exemplary clubs, and a third insert, different from the first and second inserts. The third insert is a combination of solid materials, and does not comprise apertures. The third insert only fills a portion of the cavity and does not fill any portion of the undercut.

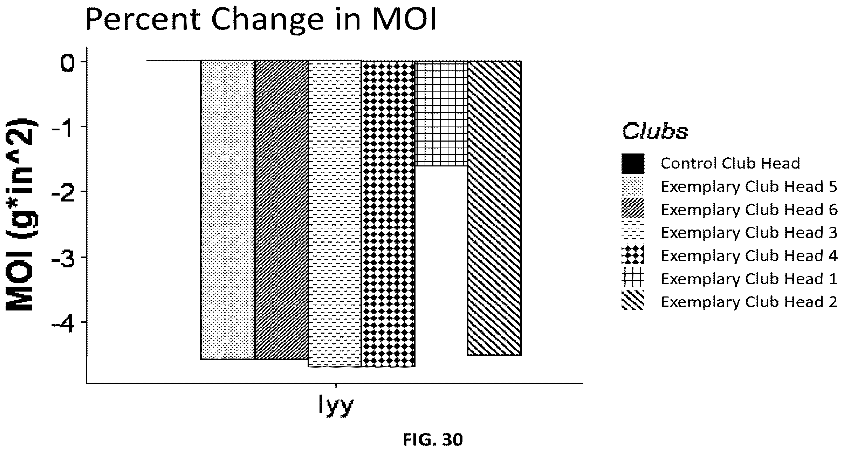

Referring to FIG. 30, each of the first, second, third, fourth, fifth, and sixth exemplary club heads had a lower MOI than the control club head. The first exemplary club head showed the smallest change relative to the control club head, with a reduced MOI by about 1.7 g*in2. The second, third, fourth, fifth, and sixth exemplary embodiments all showed approximately the same reduction in MOI from the control club head, the reduction ranging from 4.5 g*in2 to 4.8 g*in2.

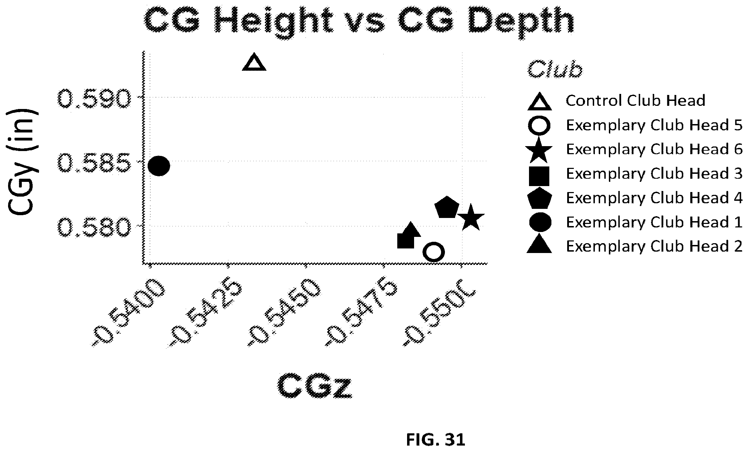

Referring to FIG. 31, each of the first, second, third, fourth, fifth, and sixth exemplary club heads had a lower CG height (CGy) than the control club head. The first, third, fourth, fifth, and sixth exemplary club heads had a greater CG depth (CGz) than the control club head. The first exemplary club head showed the smallest change relative to the control club head, with a reduced MOI by about 1.7 g*in2. The second, third, fourth, fifth, and sixth exemplary embodiments all showed approximately the same reduction in MOI from the control club head, the reduction ranging from 4.5 g*in2 to 4.8 g*in2.

### II. Comparison Between Club Head Described Herein With Variable Density Inserts and Control Club Head with Solid, Partial Fill Insert

Example II illustrates comparative results between a seventh exemplary club head, an eighth exemplary club head, and a control club head. Referring to Table 1, the club heads compared in this example are: Exemplary Club Head 7, Exemplary Club Head 8, and the Control Club Head. The seventh exemplary club head comprises the hexagonal structure insert with heel bias voids, as illustrated in FIG. 8a, and is described in Table 1 as Exemplary Club Head 7. The eighth exemplary club head comprises the hexagonal structure insert with toe bias voids, as illustrated in FIG. 8c, and is described in Table 1 as Exemplary Club Head 8. Exemplary Club Heads 1, 2, 3, 4, 5, and 6 are not discussed in this example. Exemplary Club Heads 7 and 8 have similar dimensions (length, width, height, depth, etc.), volume, mass, crown thickness, face thickness, and body structure as golf club head 100.

The seventh and eighth exemplary club heads were compared to a control club head, shown in FIG. 29, wherein the control club head comprises a similar volume, mass, crown thickness, face thickness, and body structure as the club head 100. The control club head comprises the same body structure as the exemplary club, and a control insert, different from the first insert. The control insert is a combination of solid materials, and does not comprise apertures. The control insert only fills a portion of the cavity and does not fill any portion of the undercut.

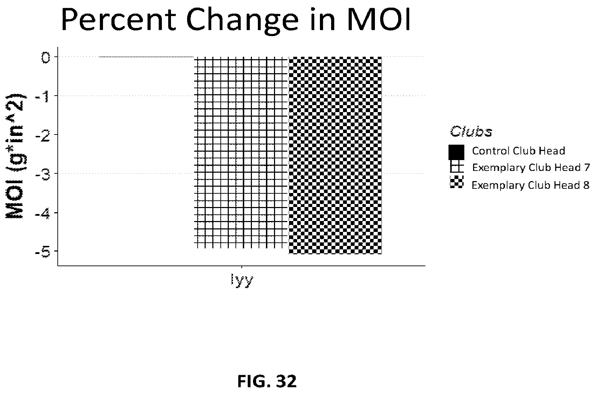

As shown in FIG. 32, both the seventh exemplary club head and the eighth exemplary club head comprise a decrease in MOI relative to the control club head. The eighth exemplary club head had a slightly larger decrease in MOI than the seventh exemplary club head.

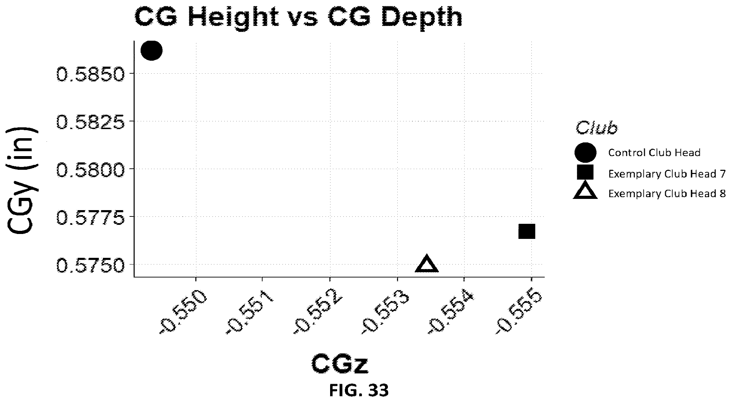

As shown in FIG. 33, both the seventh and eighth exemplary club heads lowered the center of gravity (illustrated by CGy) when compared to the control club head. The eighth exemplary club head had a slightly lower center of gravity than the seventh exemplary club head.

Furthermore, both the seventh and eighth exemplary club heads moved the center of gravity more rearward (illustrated by CGz) than the control club head. The seventh exemplary club head moved the center of gravity slightly further rearward than the eighth exemplary club head.

### III. Comparison Between Club Head Described Herein and Control Club Head with Solid, Partial Fill Insert

Example II illustrates comparative results between a seventh exemplary club head, an eighth exemplary club head, and a control club head. Referring to Table 1, the club heads compared in this example are: Exemplary Club Head 7, Exemplary Club Head 8, and the Control Club Head. The seventh exemplary club head comprises the hexagonal structure insert with heel bias voids, as illustrated in FIG. 8a, and is described in Table 1 as Exemplary Club Head 7. The eighth exemplary club head comprises the hexagonal structure insert with toe bias voids, as illustrated in FIG. 8c, and is described in Table 1 as Exemplary Club Head 8. Exemplary Club Heads 1, 2, 3, 4, 5, and 6 are not discussed in this example. Exemplary Club Heads 7 and 8 have similar dimensions (length, width, height, depth, etc.), volume, mass, crown thickness, face thickness, and body structure as golf club head 100.

The seventh and eighth exemplary club heads were compared to a control club head, shown in FIG. 29, wherein the control club head comprises a similar volume, mass, crown thickness, face thickness, and body structure as the club head 100. The control club head comprises the same body structure as the exemplary club heads, and a control insert, different from the first insert. The control insert is a combination of solid materials, and does not comprise apertures. The control insert only fills a portion of the cavity and does not fill any portion of the undercut.

The seventh exemplary club head and the eighth exemplary club head head were each hit the same number of times. Referring to FIG. 30, the club heads were each hits at eleven different impact locations upon the strikeface. Specifically, data was recorded at a center impact location 170, 5 toe impact locations (171,172, 173, 174, 175) and 5 heel impact locations (165, 166, 167, 168, 169) with each toe and heel impact locations moving progressively more toeward or heelward respectively. Data regarding ball speed, spin rate, and launch angle was collected for each hit. Impact locations Heel 5 165 and Toe 5 175 are the furthermost heel impact locations relative to the center and heel 4 166 and Toe 4 174 are the second furthest heel impact locations relative to the center.

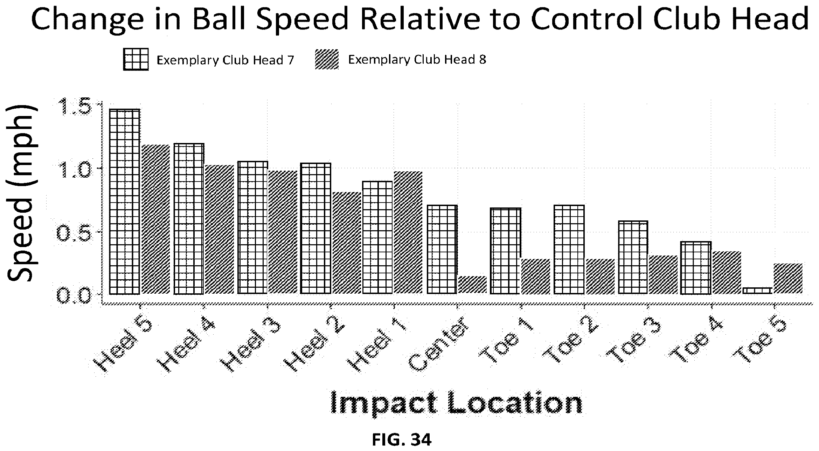

FIG. 34 illustrates ball speed of both the seventh exemplary club head and the eighth exemplary club head at each of the eleven impact locations, relative to the control club head. Referring to FIG. 34, both the seventh exemplary club head and the eighth exemplary club head had a greater ball speed than the control club head at each of the eleven impact locations.

On average, the seventh exemplary club head showed a 0.1-1.5 mph increase in ball speed, relative to the control club head. This increase in ball speed can lead to an increase in travel distance of up to about 3 yards. On average, the eighth exemplary club head showed a 0.2-1.2 mph increase in ball speed, relative to the control club head. This increase in ball speed can lead to an increase in travel distance of up to about 2 yards.

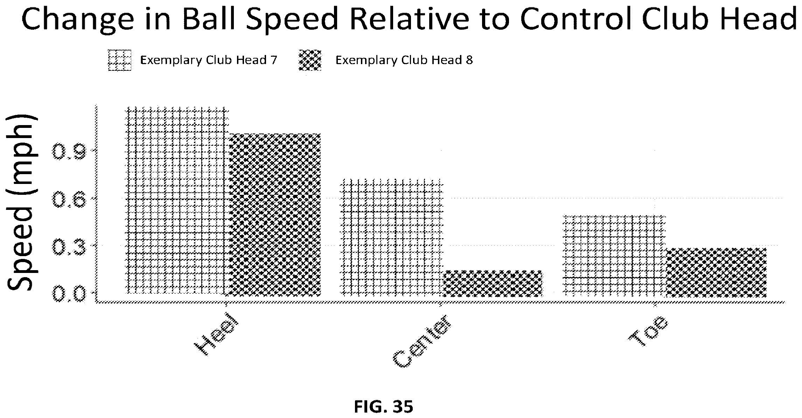

FIG. 35 illustrates the same data as FIG. 34, but is organized to show the ball speed differences in heel hits, center hits, and toe hits between the seventh exemplary club head, the eighth exemplary club head, and the control club head. These differences are discussed in detail below.

Referring to FIG. 35, on average, the seventh exemplary club head showed an increase in ball speed of more than 1 mph, for hits on the heel side of the strikeface (in all of impact locations: Heel 1, Heel 2, Heel 3, Heel 4, and Heel 5) relative to hits in the same locations on the control club head. On average, the eighth exemplary club head showed an increase in ball speed of about 1 mph, for hits on the heel side of the strikeface (in all of impact locations: Heel 1, Heel 2, Heel 3, Heel 4, and Heel 5) relative to hits in the same locations on the control club head.

Again referring to FIG. 35, on average, the seventh exemplary club head showed an increase in ball speed of about 0.75 mph, for hits in the center of the strikeface relative to hits in the same location on the control club head. On average, the eighth exemplary club head showed an increase in ball speed of about 0.15 mph, for hits in the center of the strikeface relative to hits in the same location on the control club head.

Still referring to FIG. 35, on average, the seventh exemplary club head showed an increase in ball speed of about 0.5 mph, for hits on the toe side of the strikeface (in all of impact locations: Toe 1, Toe 2, Toe 3, Toe 4, and Toe 5) relative to hits in the same locations on the control club head. Referring to FIG. 35, on average, the eighth exemplary club head showed an increase in ball speed of about 0.3 mph, for hits on the toe side of the strikeface (in all of impact locations: Toe 1, Toe 2, Toe 3, Toe 4, and Toe 5) relative to hits in the same locations on the control club head.

Overall, the seventh exemplary club head and the eighth exemplary club head showed an increase in ball speed over the control club head for hits at any location upon the club head. The most significant improvement in ball speed for the seventh and eighth exemplary club heads is seen in impacts on the heel side of the strikeface. These increases in ball speed can lead to an increase in travel distance of up to approximately 3 yards.

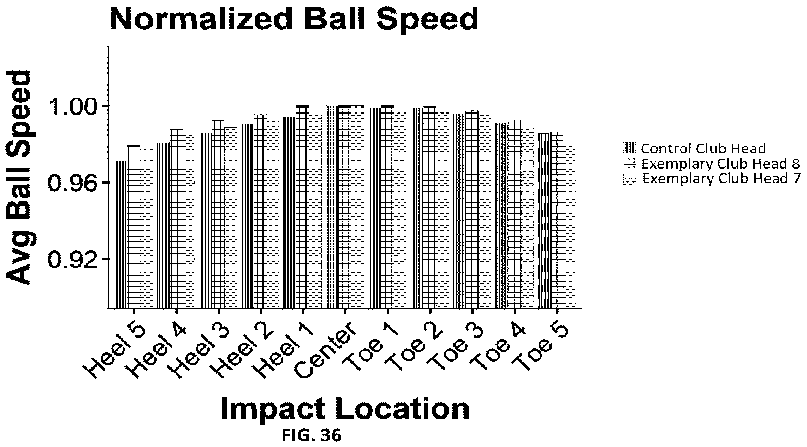

FIG. 36 illustrates the same data as FIG. 34. In FIG. 36, however, the data for each of the seventh exemplary club head, the eighth exemplary club head, and the control club head is separately normalized such that the "center" impact ball speed is normalized to be depicted as 1, despite that value varying among the three club heads.

Referring to FIG. 36, the seventh exemplary club head shows a reduction in variation in ball speed among hits at all different impact locations upon the strikeface. As can be seen in Table 7, the ball speed drops somewhat sequentially from the center, toward impact location Heel 5, and from the center, toward impact location Toe 5 for all three club heads. The ball speed of the seventh exemplary club head decreases only slightly from the center impact location toward each of Heel 5 and Toe 5. This means that the seventh exemplary club head maintains ball speed for off-center hits better than the control club head.

The eighth exemplary club head shows a reduction in variation in ball speed among hits at all locations toward the impact location Heel 5, relative to the control club head. For the five heel-side impact locations, the ball speed of the eighth exemplary club head drops less than that of the control club head.

The seventh exemplary club head shows a more mild reduction in ball speed for all impact locations on both the toe and heel sides of the strikeface, when compared with either the second exemplary club head or the control club head. As described above, the eighth exemplary club head showed reduced variation in ball speed on the heel side of the strikeface when compared with the control club head, but the seventh exemplary club head showed even less variation. Therefore, both the seventh exemplary club head and the eighth exemplary club head showed improvements in ball speed variation for off-center hits over the control club head. The seventh exemplary club head had the most consistent ball speed for hits across the strike face.

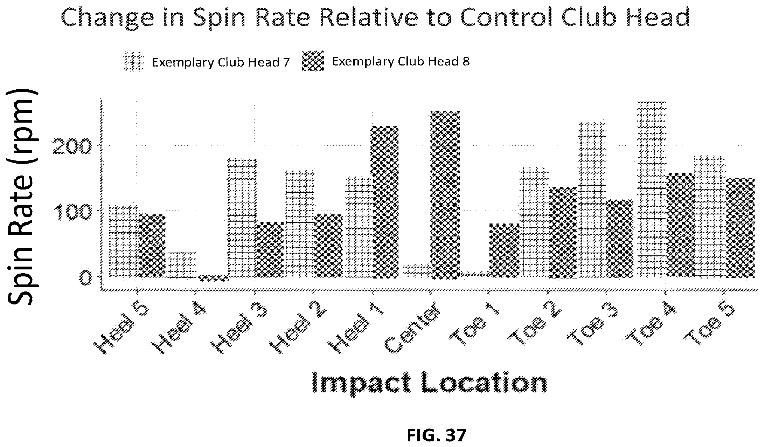

FIG. 37 illustrates the spin rate of both the seventh exemplary club head and the eighth exemplary club head at each of the eleven impact locations, relative to the control club head. Referring to Table 8, the seventh exemplary club head had a greater spin rate than the control club head at each of the eleven impact locations. The eighth exemplary club head had a greater spin rate than the control club head at ten of the eleven impact locations.

On average, both the seventh exemplary club head and the eighth exemplary club head showed an increase in spin rate, relative to the control club head. Increased spin rate can prevent the ball from traveling great distances from its landing location.

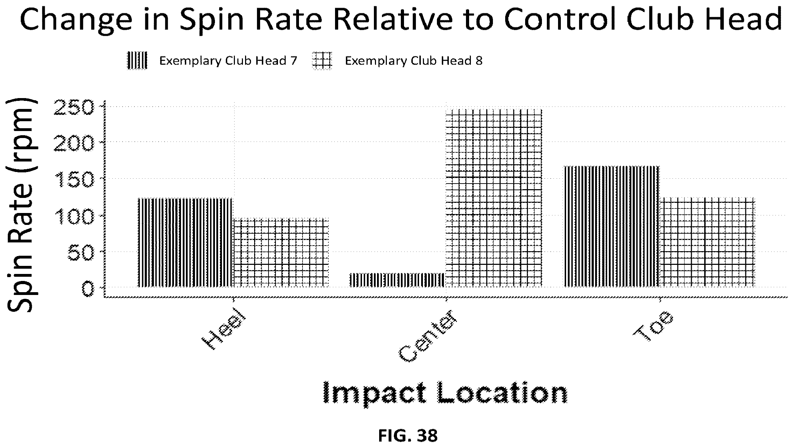

FIG. 38 illustrates the same data as FIG. 37, organized to show the spin rate differences in heel hits, center hits, and toe hits between the seventh exemplary club head, the eighth exemplary club head, and the control club head. These differences are discussed in detail below.

Referring to FIG. 38, on average, the seventh exemplary club head showed an increase spin rate of about 125 rpm, for hits on the heel side of the strikeface (in all of impact locations: Heel 1, Heel 2, Heel 3, Heel 4, and Heel 5) relative to hits in the same locations on the control club head. On average, the eighth exemplary club head showed an increase in spin rate of about 95 rpm, for hits on the heel side of the strikeface (in all of impact locations: Heel 1, Heel 2, Heel 3, Heel 4, and Heel 5) relative to hits in the same locations on the control club head.

Again referring to FIG. 38 on average, the seventh exemplary club head showed an increase in spin rate of about 20 rpm, for hits in the center of the strikeface relative to hits in the same location on the control club head. On average, the eighth exemplary club head showed an increase in spin rate of about 245 rpm, for hits in the center of the strikeface relative to hits in the same location on the control club head.

Still referring to FIG. 38, on average, the seventh exemplary club head showed an increase in spin rate of about 165 rpm, for hits on the toe side of the strikeface (in all of impact locations: Toe 1, Toe 2, Toe 3, Toe 4, and Toe 5) relative to hits in the same locations on the control club head. On average, the eighth exemplary club head showed an increase in spin rate of about 125 rpm, for hits on the toe side of the strikeface (in all of impact locations: Toe 1, Toe 2, Toe 3, Toe 4, and Toe 5) relative to hits in the same locations on the control club head.

Overall, the seventh exemplary club head and the eighth exemplary club head showed an increase in spin rate over the control club head for hits on the heel side, toe side, or center of the strikeface. The most significant improvements in spin rate are seen in the center of the strike face for the eighth exemplary club head, and on the toe side for the seventh exemplary club head.

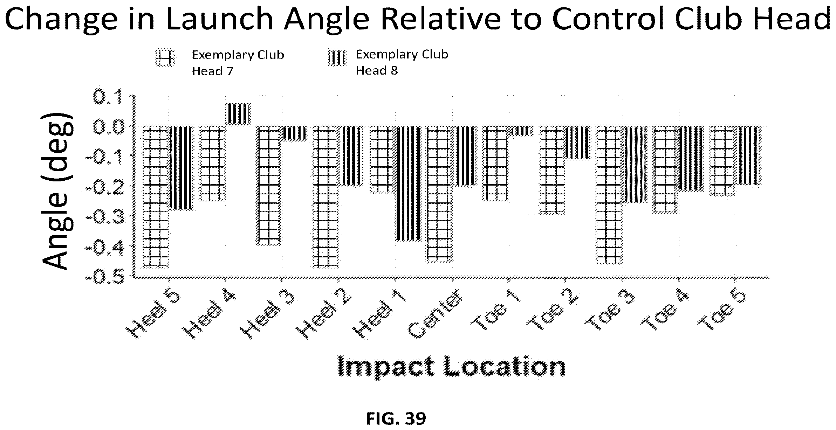

FIG. 39 illustrates the launch angle of both the seventh exemplary club head and the eighth exemplary club head at each of the eleven impact locations, relative to the control club head. Referring to FIG. 39, the seventh exemplary club head has a lower launch angle than the control club head at all of the eleven impact location. The eighth exemplary club head had a lower launch angle at ten out of eleven impact locations. Furthermore, the seventh exemplary club head has a lower launch angle than the eighth exemplary club head at ten of the eleven impact locations.

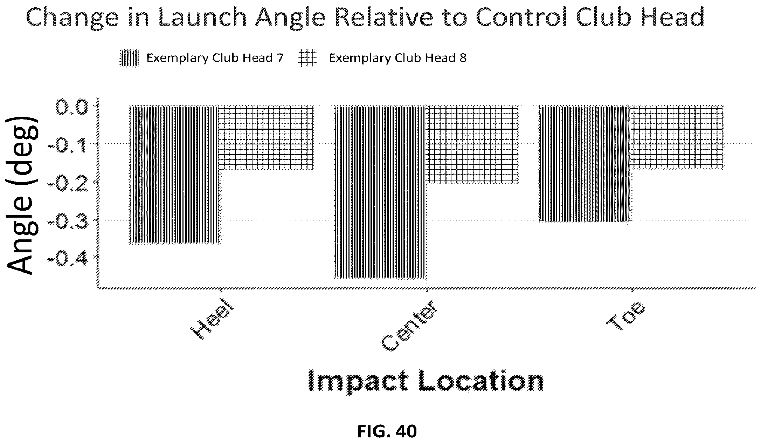

FIG. 40 illustrates the same data as FIG. 39, organized to show the launch angle differences in heel hits, center hits, and toe hits between the seventh exemplary club head, the eighth exemplary club head, and the control club head. These differences are discussed in detail below.

Referring to FIG. 40, on average, the seventh exemplary club head showed decrease in launch angle of about 0.35 degrees, for hits on the heel side of the strikeface (in all of impact locations: Heel 1, Heel 2, Heel 3, Heel 4, and Heel 5) relative to hits in the same locations on the control club head. On average, the eighth exemplary club head showed decrease in launch angle of about 0.17 rpm, for hits on the heel side of the strikeface (in all of impact locations: Heel 1, Heel 2, Heel 3, Heel 4, and Heel 5) relative to hits in the same locations on the control club head.

Again referring to FIG. 40, on average, the seventh exemplary club head showed a decrease in launch angle of about 0.47 degrees, for hits in the center of the strikeface relative to hits in the same location on the control club head. On average, the eighth exemplary club head showed decrease in launch angle of about 0.2, for hits in the center of the strikeface relative to hits in the same location on the control club head.

Still referring to FIG. 40, on average, the seventh exemplary club head showed a decrease in launch angle of about 0.3 degrees, for hits on the toe side of the strikeface (in all of impact locations: Toe 1, Toe 2, Toe 3, Toe 4, and Toe 5) relative to hits in the same locations on the control club head. On average, the eighth exemplary club head showed a decrease in launch angle of about 0.17 degrees, for hits on the toe side of the strikeface (in all of impact locations: Toe 1, Toe 2, Toe 3, Toe 4, and Toe 5) relative to hits in the same locations on the control club head.

Overall, the seventh exemplary club head and the eighth exemplary club head both showed minor reductions in launch angle relative to the control club head. The launch angles varied by less than half a degree at all impact locations. These differences in launch angle are minor and insignificant, therefore leading to the conclusion that the launch angles of the seventh exemplary club head and the eighth exemplary club head are very similar to the launch angle of the control club head.

### IV. Comparison Between Club Heads Described Herein Having Gyro Twist, Hexagon, and Diamond Design With Top Rail and No Top Rail and Control Club Head

Example IV illustrates comparative results between a first exemplary club head, a second exemplary club head, a third exemplary club head, a fourth exemplary club head, a fifth exemplary club head, a sixth exemplary club head, and a control club head. Referring to Table 1, the club heads compared in this example are: Exemplary Club Head 1, Exemplary Club Head 2, and the Control Club Head; Exemplary Club Head 3, Exemplary Club Head 4, and the Control Club Head; and Exemplary Club Head 5, Exemplary Club Head 6, and the Control Club Head. Exemplary Club Heads 1, 2, 3, 4, 5, and 6 each have similar dimensions (length, width, height, depth, etc.) as golf club head 100.

Exemplary Club Heads 1, 2, 3, 4, 5, and 6 comprise a similar volume, mass, crown thickness, face thickness, and body structure as the club head 100. The first exemplary club head and the second exemplary club head are described in Table 1 as Exemplary Club Head 1 and Exemplary Club Head 2, respectively. Both comprise inserts with the hexagonal structure, as described above in club head 200. The first exemplary club head comprises a first insert having the hexagonal structure with no top rail fill portion. The second exemplary club head comprises a second insert having the hexagonal structure with a top rail fill portion.

Similarly, the third exemplary club head and the fourth exemplary club head are described in Table 1 as Exemplary Club Head 3 and Exemplary Club Head 4, respectively. The third and fourth exemplary club heads both comprise inserts with the gyroid structure, as described above in club head 400. The third exemplary embodiment comprises a third insert that does not have a top rail fill while the fourth exemplary embodiment comprises a fourth insert that has a top rail fill.

Similarly still, the fifth exemplary club head and the sixth exemplary club head are described in Table 1 as Exemplary Club Head 5 and Exemplary Club Head 6, respectively. The fifth and sixth exemplary club heads both comprise inserts with the diamond structure, as described above in club head 500. The fifth exemplary club head insert comprises a fifth insert that does not have a top rail fill while the sixth exemplary club head comprises a sixth insert that has a top rail fill.

The first, second, third, fourth, fifth, and sixth exemplary club heads, as described above, were compared to a control club head, shown in FIG. 29, wherein the control club head comprises a similar volume, mass, crown thickness, face thickness, and body structure as the club head 100. The control club head comprises the same body structure as both the first and second exemplary clubs, and a third insert, different from the first and second inserts. The third insert is a combination of solid materials, and does not comprise apertures. The third insert only fills a portion of the cavity and does not fill any portion of the undercut.

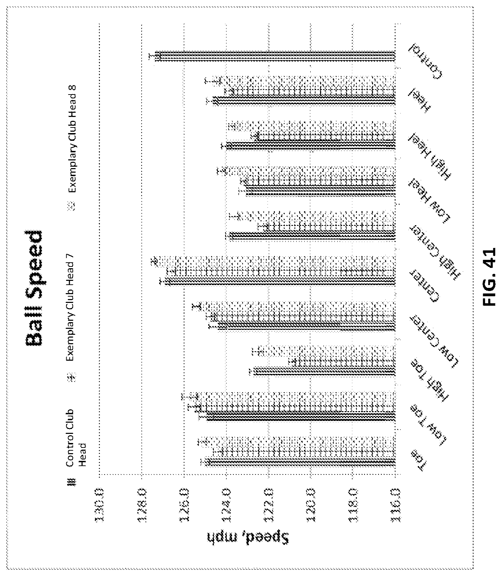

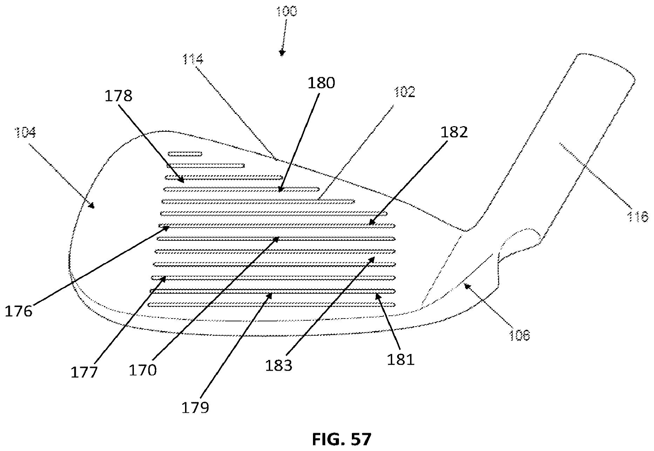

Each of the first, second, third, fourth, fifth, and sixth exemplary club heads, and the control club head were hit in nine impact locations the same number of times. The impact locations can be viewed in FIG. 57. The first impact location is the toe region 176. The second impact location is the low toe region 177. The third impact location is the high toe region 178. The fourth impact location is the low center region 179. The fifth impact location is the center region 170. The sixth impact location is the high center region 180. The seventh impact location is the low heel region 181. The eighth impact location is the high heel region 182. The ninth impact location is the heel region 183. Ball speed data was collected for balls hit at each impact location and is recorded in the tables of FIGS. 41-46.

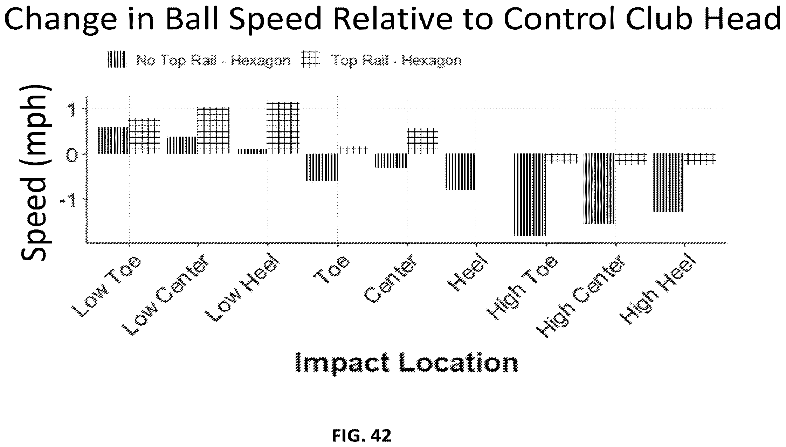

Referring to FIGS. 41 and 42, at six of the nine impact locations, the second exemplary club head showed a greater ball speed than the control club head. On average, the second exemplary club head showed an increase in ball speed relative to the control club head. The first exemplary club head showed greater ball speed than the control club head at only three of the nine impact locations. This data indicates that the ball speed of both the first and second exemplary club heads is similar to that of the control club head.

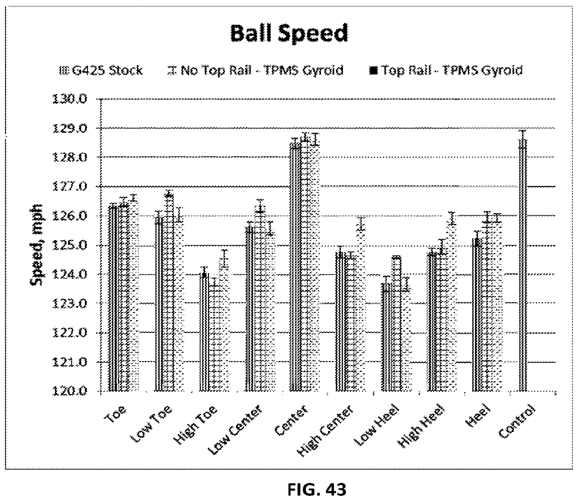

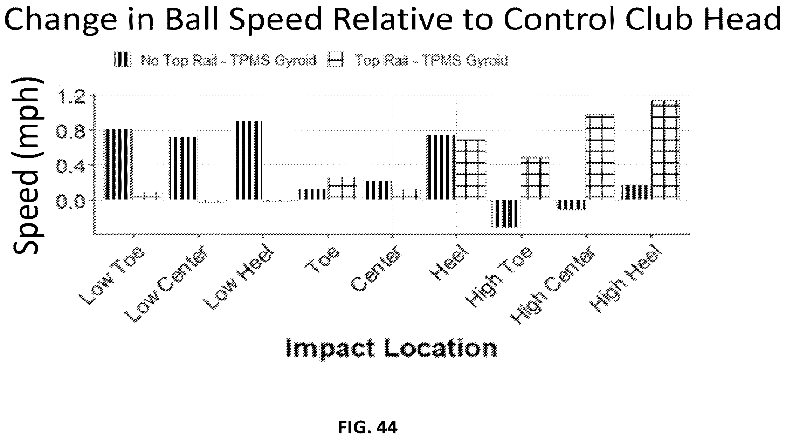

Referring to FIGS. 43 and 44, at six of the nine impact locations, the fourth exemplary club head showed a greater ball speed than the control club head. The third exemplary club head showed greater ball speed than the control club head at seven of the nine impact locations. On average, both the third and fourth exemplary club heads showed an increase in ball speed when compared with the control club head. This data indicates that the ball speed of both the first and second exemplary club heads is similar to, and slightly greater than, that of the control club head.

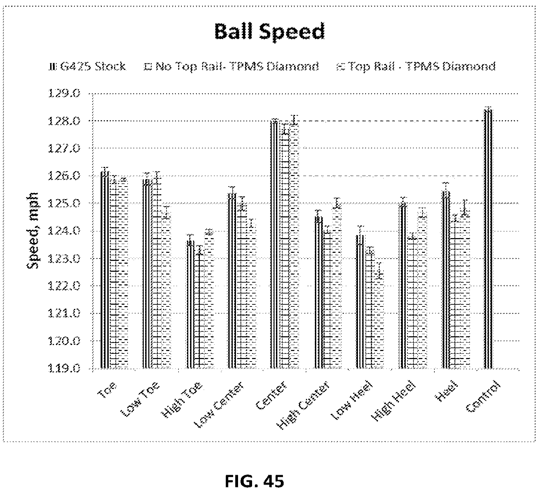

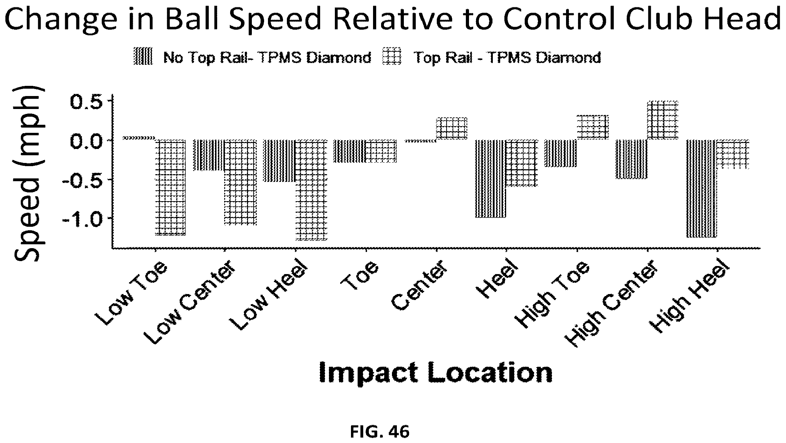

Referring to FIGS. 45 and 46, at three of the nine impact locations, the sixth exemplary club head showed a greater ball speed than the control club head. The fifth exemplary club head showed greater ball speed than the control club head at only one of the nine impact locations. This data indicates that the ball speed of both the first and second exemplary club heads is similar to that of the control club head.

### V. Comparison Between Club Head Described Herein With Flexible Heel and Control Club Head

Example V illustrates comparative results between a seventh exemplary club head and a control club head. Referring to Table 1, the club heads compared in this example are: Exemplary Club Head 7 and the Control Club Head. The seventh exemplary club head comprises the hexagonal structure insert with heel bias voids, as illustrated in FIG. 8a, and is described in Table 1 as Exemplary Club Head 7. Exemplary Club Heads 1, 2, 3, 4, 5, and 6 are not discussed in this example. Exemplary Club Head 7 has similar dimensions (length, width, height, depth, etc.), volume, mass, crown thickness, face thickness, and body structure as golf club head 100.

The seventh exemplary club head was compared to a control club head, shown in FIG. 29, wherein the control club head comprises a similar volume, mass, crown thickness, face thickness, and body structure as the club head 100. The control club head comprises the same body structure as the exemplary club, and a control insert, different from the first insert. The control insert is a combination of solid materials, and does not comprise apertures. The control insert only fills a portion of the cavity and does not fill any portion of the undercut.

Each of the seventh exemplary golf club and the control golf club were hit the same number of times. Environmental factors were similar for each hit, and factors such as swing speed and impact location were kept approximately equal. Ball speed, spin rate, and launch angle were recorded.

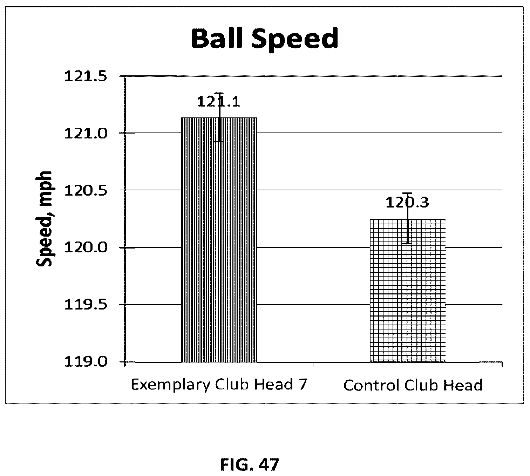

Referring to FIG. 47, the average ball speed of the seventh exemplary club head is greater than the average ball speed of the control club head. Specifically, the average ball speed was 0.8 mph greater for the seventh exemplary club head, relative to the control club head. This ball speed increase can result in an approximate increase in distance traveled of nearly 2 yards.

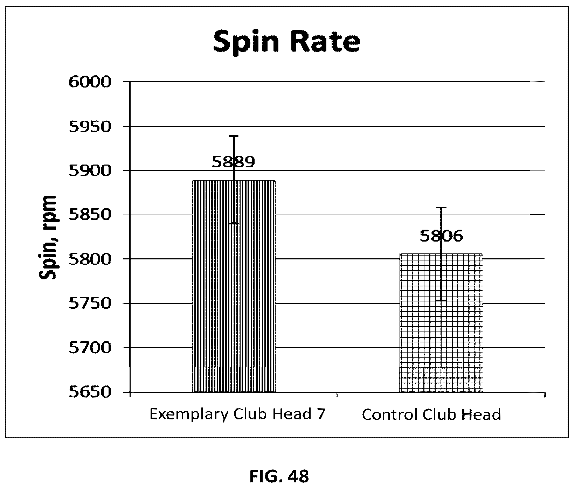

Referring to FIG. 48, the average spin rate of the seventh exemplary club head is greater than the average spin rate of the control club head. Specifically, the average spin rate of the exemplary club head was 83 rpm greater than that of the control club head. The increase in spin rate can desirably help prevent the ball from rolling great distances from where it lands.

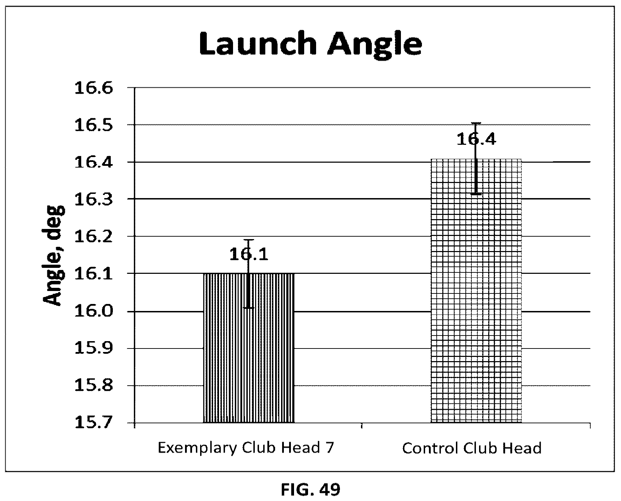

Referring to FIG. 49, the average launch angle of the seventh exemplary club head is similar to and slightly less than the average launch angle of the control club head. Specifically, the average launch angle of the seventh exemplary club head was 0.3 degrees less than that of the control club head. This minor reduction in launch angle may be a result of increased face flexure. The increase in ball speed provided by the seventh exemplary golf club head, as discussed above, overcomes and exceeds any potential drawbacks that result from the noted minor decrease in launch angle.

Overall, the seventh exemplary club head shows an increase in ball speed, an increase in spin rate, and a slight decrease in launch angle when compared with the control club head. The increase in ball speed and launch angle can provide the golfer with improved performance, leading to a greater ball distance traveled, and an improved ability for the ball to remain near its landing location without rolling great distances. This data indicates that the seventh exemplary club head exhibits similar performance characteristics as the control club head.

### VI. Comparison Between Club Head Described Herein With Flexible Heel and Top Rail Fill and Control Club Head

Example VI illustrates comparative results between the same two club heads compared in Example V - the seventh exemplary club head and the control club head. Referring to Table 1, the club heads compared in this example are: Exemplary Club Head 7 and the Control Club Head. The seventh exemplary club head comprises the hexagonal structure insert with heel bias voids, as illustrated in FIG. 8a, and is described in Table 1 as Exemplary Club Head 7. Exemplary Club Heads 1, 2, 3, 4, 5, and 6 are not discussed in this example. Exemplary Club Head 7 has similar dimensions (length, width, height, depth, etc.), volume, mass, crown thickness, face thickness, and body structure as golf club head 100.

The seventh exemplary club head was compared to a control club head, shown in FIG. 29, wherein the control club head comprises a similar volume, mass, crown thickness, face thickness, and body structure as the club head 100. The control club head comprises the same body structure as the exemplary club, and a control insert, different from the first insert. The control insert is a combination of solid materials, and does not comprise apertures. The control insert only fills a portion of the cavity and does not fill any portion of the undercut.

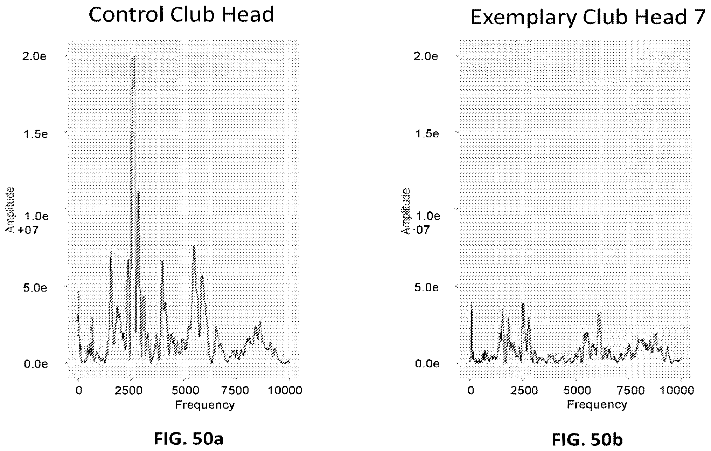

A sound analysis was conducted for each of the seventh exemplary club head and the stock club head. To conduct the test, the seventh exemplary club head was held steady while a ball was impacted with the club head at a consistent speed, typical of the swing speed of an average golfer. Data was recorded using a microphone held near the club head during impact. Referring to FIGS. 50a and 50b, amplitude data was recorded against frequency. The seventh exemplary club head showed a substantial decrease in peak amplitudes at numerous frequencies and, in particular, at a 2600 HZ frequency. The greatest amplitude peak is reduced to less than ¼ of its original value, a drop that results in a more consistent sound and feel before, during, and after impact, and which significantly affects vibrations felt and heard by the golfer during impact. As a result, the seventh exemplary club head creates a much more muted sound than the control club head.

### VII. Comparison Between Club Head Described Herein With Top Rail Fill and Without Top Rail Fill and Heel and Control Club Head

Example VII illustrates comparative results between a first exemplary club head, a second exemplary club head, and a control club head. Referring to Table 1, the club heads compared in this example are: Exemplary Club Head 1, Exemplary Club Head 2, and the Control Club Head. The first exemplary club head comprises the hexagonal structure insert with no top rail fill, as illustrated in FIG. 12, and is described in Table 1 as Exemplary Club Head 1. The second exemplary club head comprises the hexagonal structure insert with a top rail fill, as illustrated in FIG. 11, and is described in Table 1 as Exemplary Club Head 2. Exemplary Club Heads 1 and 2 have similar dimensions (length, width, height, depth, etc.), volume, mass, crown thickness, face thickness, and body structure as golf club head 100.

The first and second exemplary club heads were compared to a control club head, shown in FIG. 29, wherein the control club head comprises a similar volume, mass, crown thickness, face thickness, and body structure as the club head 100. The control club head comprises the same body structure as the exemplary club, and a control insert, different from the first insert. The control insert is a combination of solid materials, and does not comprise apertures. The control insert only fills a portion of the cavity and does not fill any portion of the undercut.

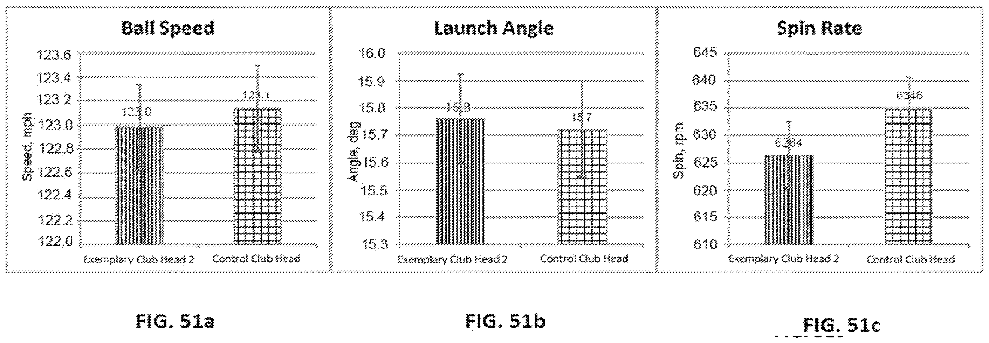

The first exemplary club head, the second exemplary club head, and the control club head received identical shafts. Each of the first exemplary golf club, the second exemplary golf club, and the control golf club were hit the same number of times. Referring to FIGS. 51a-52c, ball speed, spin rate, and launch angle were recorded for each golf club.

Referring to FIG. 51a, the average ball speed of the second exemplary club head was found to be nearly the same as the average ball speed of the control club head. Specifically, the average ball speed was 0.1 mph less for the second exemplary club head, relative to the control club head. The recorded difference in ball speed of 0.1 mph is negligible and would not be detectable by a golfer, nor would it cause a substantial difference in distance.

Referring to FIG. 51b, the average launch angle of the second exemplary club head was found to be nearly the same as the average launch angle of the control club head. Specifically, the average launch angle was 0.1 degree greater for the second exemplary club head, relative to the control club head.

Referring to FIG. 51C, the average spin rate of the second exemplary club head was less than the average spin rate of the control club head. Specifically, the second exemplary club head had an average spin rate of 6264 rpm, while the control club head had an average spin rate of 6348 rpm.

Overall, the second exemplary club head showed no major negative impacts on performance, relative to the control club head. The differences measured in ball speed and launch angle were negligible, while the spin rate was reduced by about 1.3 percent when the second exemplary club head was used, relative to the control club head.

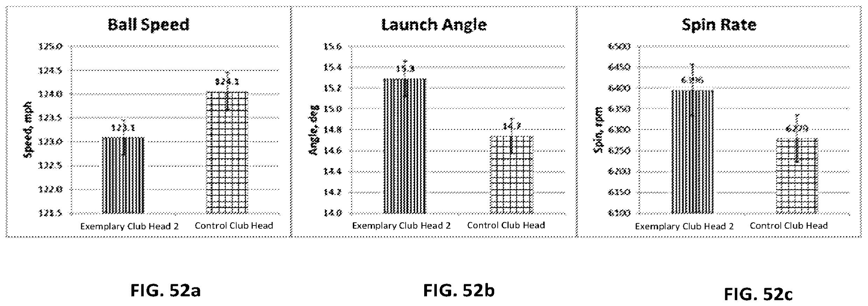

Referring to FIG. 52a, the average ball speed of the first exemplary club head was found to be similar to the average ball speed of the control club head. Specifically, the average ball speed was 1 mph less (0.8% less) for the first exemplary club head, relative to the control club head. The recorded difference in ball speed of 1 mph is minor and could cause a loss of approximately 2 yards in travel distance.

Referring to FIG. 52b, the average launch angle of the first exemplary club head was found to be nearly the same as the average launch angle of the control club head. Specifically, the average launch angle was 0.6 degree greater for the first exemplary club head, relative to the control club head.

Referring to FIG. 52c, the average spin rate of the first exemplary club head was greater than the average spin rate of the control club head. Specifically, the first exemplary club head had an average spin rate of 6396 rpm, while the control club head had an average spin rate of 6279 rpm.

Overall, the first exemplary club head showed no major negative impacts on performance, relative to the control club head. The differences measured in ball speed and launch angle were minor, while the spin rate was increased by about 1.9 percent when the first exemplary club head was used, relative to the control club head. The second exemplary club head, however, showed fewer differences in performance than then first exemplary club head, when compared with the control club head. Results of perceived performance, sound, and feel characteristics are described below, and present improvements over the control club head that make the exemplary club heads more desirable to a golfer, while substantially maintaining performance characteristics, as described above.

### VIII. Player Survey - Comparison Between Club Head Described Herein With Flexible Heel and Control Club Head

Example VI illustrates comparative results between the same two club heads compared in Example V - the seventh exemplary club head and the control club head. Referring to Table 1, the club heads compared in this example are: Exemplary Club Head 7 and the Control Club Head. The seventh exemplary club head comprises the hexagonal structure insert with heel bias voids, as illustrated in FIG. 8a, and is described in Table 1 as Exemplary Club Head 7. Exemplary Club Heads 1, 2, 3, 4, 5, and 6 are not discussed in this example. Exemplary Club Head 7 has similar dimensions (length, width, height, depth, etc.), volume, mass, crown thickness, face thickness, and body structure as golf club head 100.

The seventh exemplary club head was compared to a control club head, shown in FIG. 29, wherein the control club head comprises a similar volume, mass, crown thickness, face thickness, and body structure as the club head 100. The control club head comprises the same body structure as the exemplary club, and a control insert, different from the first insert. The control insert is a combination of solid materials, and does not comprise apertures. The control insert only fills a portion of the cavity and does not fill any portion of the undercut.

After hitting each of the seventh exemplary club head and the control club head, golfers answered a questionnaire regarding perceived performance of the seventh exemplary club head and the control club head. As noted above, this survey was taken immediately after the player participated in the test described in Example V. The survey asked the players to rate the importance of each question's subject on a scale of 1 to 5, wherein 5 is the most important. Next, the players were asked to rank their overall satisfaction with each club in each category on a scale of 1 to 5, 5 indicating most satisfied.

The first five questions were directed to the following categories; perceived ball speed, mishits, impact experience, and sound. The sixth question was directed to an overall satisfaction score for each of the exemplary club head and control club head. The seventh question was directed to overall satisfaction with the players swing (this does not indicate any preferences on clubs).

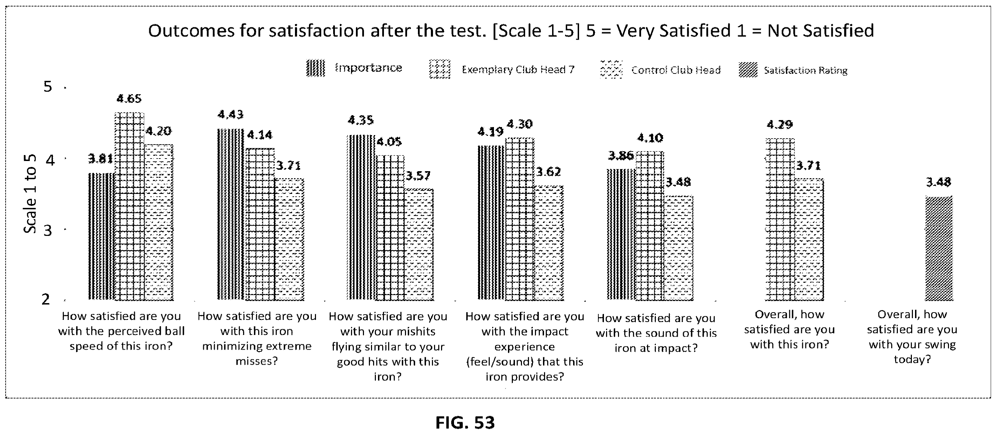

Referring to FIG. 53, on average, the surveyed golfers rated the seventh exemplary golf club higher than the control golf club for perceived ball speed, minimization of extreme misses, mishit flight path, feel and sound, impact experience, and overall satisfaction. These results indicate that golfers, on average, greatly prefer the experience of the seventh exemplary golf club head over that of the control golf club head.

The most significant difference perceived by the players was related to the experienced sound and feel. On average, the players ranked the seventh exemplary club head with a score of 4.30 and the control club head with a score of 3.62. This category was the second most important category, according to an average of the golfers' ratings.

### IX. Player Survey - Comparison Between Club Head Described Herein With Top Rail Fill and Without Top Rail Fill and Heel and Control Club Head

Example IX illustrates comparative results between the same three club heads compared in Example VI - the first exemplary club head, the second exemplary club head, and the control club head. Referring to Table 1, the club heads compared in this example are: Exemplary Club Head 1, Exemplary Club Head 2, and the Control Club Head. The first exemplary club head comprises the hexagonal structure insert with no top rail fill, as illustrated in FIG. 12, and is described in Table 1 as Exemplary Club Head 1. The second exemplary club head comprises the hexagonal structure insert with a top rail fill, as illustrated in FIG. 11, and is described in Table 1 as Exemplary Club Head 2. Exemplary Club Heads 1 and 2 have similar dimensions (length, width, height, depth, etc.), volume, mass, crown thickness, face thickness, and body structure as golf club head 100.

The first and second exemplary club heads were compared to a control club head, shown in FIG. 29, wherein the control club head comprises a similar volume, mass, crown thickness, face thickness, and body structure as the club head 100. The control club head comprises the same body structure as the exemplary club, and a control insert, different from the first insert. The control insert is a combination of solid materials, and does not comprise apertures. The control insert only fills a portion of the cavity and does not fill any portion of the undercut.

After hitting each of the seventh exemplary club head and the control club head an equal number of times, golfers answered two questionnaires regarding perceived performance of the seventh exemplary club head and the control club head. These surveys were taken immediately after the player participated in the test described in Example VI. The survey asked the players to rate the importance of each question's subject on a scale of 1 to 5, wherein 5 is the most important. Next, the players were asked to rank their overall satisfaction with each club in each category on a scale of 1 to 5, 5 indicating most satisfied.

On both questionnaires, the first four questions were directed to the following categories; perceived ball speed, mishits, impact experience, and sound. The fifth question was directed to an overall satisfaction score for each of the exemplary club head and control club head. The sixth question was directed to overall satisfaction with the players swing (this does not indicate any preferences on clubs).

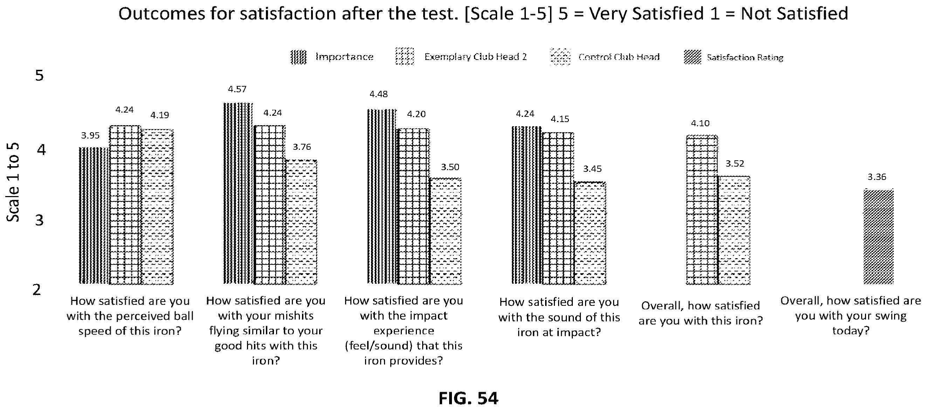

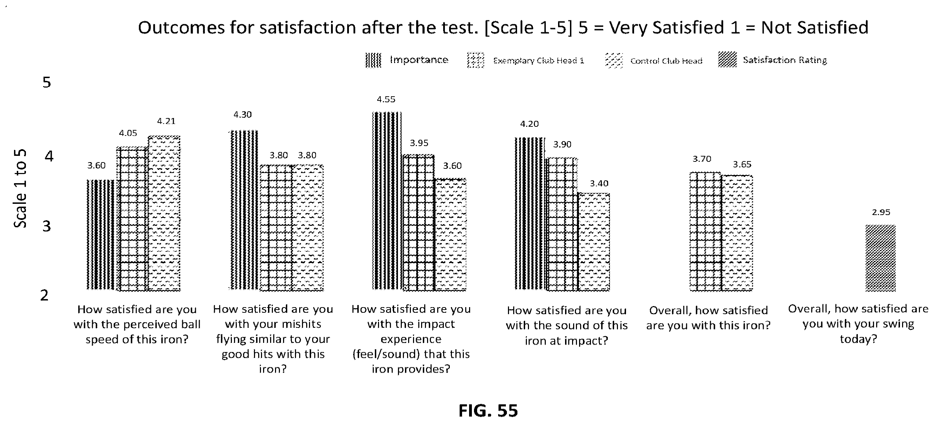

The first survey (FIG. 54) was directed to the golfer's perception of the second exemplary club head and the control club head. The second survey (FIG. 55) was directed to the golfer's perception of the first exemplary club head and the control club head.

The first survey was directed to the second exemplary club head and the control club head in Example VI. Referring to FIG. 54, on average, the surveyed golfers rated the second exemplary golf club higher than the control golf club for perceived ball speed, minimization of extreme misses, mishit flight path, feel and sound, impact experience, and overall satisfaction. These results indicate that golfers, on average, greatly prefer the experience of the second exemplary golf club head over that of the control golf club head.

One of the most significant differences perceived by the players was related to the experienced sound and feel. On average, the players ranked the second exemplary club head with a score of 4.20 and the control club head with a score of 3.50. This category was the second most important category, according to an average of the golfers' ratings.

The second survey was directed to the first exemplary club head and the control club head in Example VI. Referring to FIG. 55, on average, the surveyed golfers rated the first exemplary golf club higher than the control golf club for perceived flight path, feel and sound, impact experience, and overall satisfaction. These results indicate that golfers, on average, greatly prefer the experience of the first exemplary golf club head over that of the control golf club head.

One of the most significant differences perceived by the players was related to the experienced sound and feel. On average, the players ranked the first exemplary club head with a score of 3.95 and the control club head with a score of 3.60. This category was the most important category, according to an average of the golfers' ratings.

Overall, golfers far preferred the first and second exemplary club heads over the control club head. The second exemplary club head's ratings in the four categories to which the first four questions are directed sum up to be 16.83, while the four ratings of the control club head in that test sum up to be 14.9. Therefore, the second exemplary club head was rated 13% better than the control club head. The golfers rated the second exemplary club better than the first exemplary club head. The first exemplary club head's ratings in the four categories to which the first four questions are directed sum up to be 15.7, while the four ratings of the control club head in that test sum up to be 15.0. Therefore, the second exemplary club head was rated 4.7% better than the control club head.

As the rules to golf may change from time to time (e.g., new regulations may be adopted or old rules may be eliminated or modified by golf standard organizations and/or governing bodies), golf equipment related to the methods, apparatus, and/or articles of manufacture described herein may be conforming or non-conforming to the rules of golf at any particular time. Accordingly, golf equipment related to the methods, apparatus, and/or articles of manufacture described herein may be advertised, offered for sale, and/or sold as conforming or non-conforming golf equipment. The methods, apparatus, and/or articles of manufacture described herein are not limited in this regard.

Although a particular order of actions is described above, these actions may be performed in other temporal sequences. For example, two or more actions described above may be performed sequentially, concurrently, or simultaneously. Alternatively, two or more actions may be performed in reversed order. Further, one or more actions described above may not be performed at all. The apparatus, methods, and articles of manufacture described herein are not limited in this regard.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.
**Clause 1:** An iron-type golf club head comprising: a body; and an insert, the body comprising: a strikeface, the strikeface comprising a strikeface perimeter and a rear surface; and a rear body, the rear body comprising: a toe portion, a heel portion, a top rail, and a sole; wherein the rear body and the rear surface of the strikeface define a cavity; wherein the rear body extends from the strikeface perimeter; wherein the rear surface of the strikeface and the rear body form an undercut; wherein the insert further comprises interconnecting walls; wherein the interconnecting walls form voids within the insert; wherein the voids comprise a greater volume at the heel end than at the toe end of the insert; and wherein the insert perimeter is solid at the bottom portion and top portion; wherein the cavity is configured to receive the insert; wherein the insert comprises a geometry that is complementary to a geometry of the cavity, such that the insert is configured to fill the entire cavity and extend into portions of the undercut.
**Clause 2:** The golf club head of clause 1, wherein the insert abuts the rear surface of the strike face and abuts the rear body.
**Clause 3:** The golf club head of clause 1, wherein the insert can be made of multiple pieces that are integrally formed.
**Clause 4:** The golf club head of clause 3, wherein the insert comprises a upper piece, a central piece, and a lower piece.
**Clause 5:** The golf club head of clause 4, wherein the upper piece and lower piece are integrally formed and fill the undercut and the central portion is exposed in the cavity.
**Clause 6:** The golf club head of clause 1, wherein the insert can be compressed to fit within the cavity and undercut.
**Clause 7:** The golf club head of clause 1, wherein the insert does not extend or protrude beyond the rear wall.
**Clause 8:** The golf club head of clause 1, wherein the insert is made from material selected from the list consisting of: foam, polymer, and rubber.
**Clause 9:** An iron-type club head comprising: a body; and an insert, the insert comprising a front surface, a back surface, a perimeter, a toe end, a heel end, a top portion, a bottom portion, and a perimeter; the body comprising: a strikeface, the strikeface comprising a strikeface perimeter and a rear surface; and a rear body, the rear body comprising: a toe portion, a heel portion, a top rail, and a sole; wherein the rear body and the rear surface of the strikeface define a cavity; wherein the rear body extends from the strikeface perimeter in a curved manner; wherein the rear surface of the strikeface and the rear body form an undercut; wherein the insert further comprises interconnecting walls; wherein the interconnecting walls form voids within the insert; wherein the insert perimeter is solid at the top portion; wherein the cavity is configured to receive the insert; wherein the insert comprises a geometry that is complementary to a geometry of the cavity, such that the insert is configured to fill the entire cavity and extend into portions of the undercut; wherein the top rail further comprises apertures extending into the undercut; wherein the insert further comprises protrusions complimentary to the apertures of the top rail.
**Clause 10:** The golf club head of clause 9, wherein the insert abuts the rear surface of the strike face and abuts the rear body.
**Clause 11:** The golf club head of clause 9, wherein the insert can be made of multiple pieces that are integrally formed.
**Clause 12:** The golf club head of clause 11, wherein the insert comprises a upper piece, a central piece, and a lower piece.
**Clause 13:** The golf club head of clause 12, wherein the upper piece and lower piece are integrally formed and fill the undercut and the central portion is exposed in the cavity.
**Clause 14:** The golf club head of clause 9, wherein the insert can be compressed to fit within the cavity and undercut.
**Clause 15:** The golf club head of clause 9, wherein the insert does not extend or protrude beyond the rear wall.
**Clause 16:** The golf club head of clause 9, wherein the insert is made from material selected from the list consisting of: foam, polymer, and rubber.
**Clause 17:** An iron-type club head comprising: a body and an insert; the body comprising: a strikeface, the strike face comprising a strikeface perimeter and a rear surface; and a rear body, the rear body comprising: a toe portion, a heel portion, a top rail, and a sole; wherein the rear body and the rear surface of the strikeface define a cavity; wherein the rear surface of the strikeface and the rear body form an undercut; wherein the insert is divided into a upper undercut gasket, a lower undercut gasket, and a central portion; wherein the upper undercut gasket is configured to be received in the top rail undercut, the lower undercut gasket is configured to be received in the sole undercut, and the central portion is configured to be received in the cavity.
**Clause 18:** The golf club head of clause 17, wherein the insert further comprises a badge layer on a rear surface of the insert such that the badge layer is visible from an exterior view.
**Clause 19:** The golf club head of clause 17, wherein the insert further comprises an adhesive layer configured to secure the insert to the rear surface of the strikeface.
**Clause 20:** The golf club head of clause 18, wherein the badge layer is formed of a metal.

## Claims

1. An iron-type golf club head, comprising:
a body, comprising:
a strikeface comprising a strikeface perimeter and a rear surface; and
a rear body extending from the strikeface perimeter and comprising a toe portion, a heel portion, a top rail, and a sole;
the rear body and the rear surface of the strikeface cooperating to define a cavity and form an undercut;
the undercut being formed around a perimeter of the iron-type golf club head and comprising a top rail undercut and a sole undercut; and
an insert, comprising:
interconnecting walls defining a plurality of voids;
an upper undercut gasket configured to be received in the top rail undercut;
a lower undercut gasket formed independent of the upper undercut gasket and configured to be received in the sole undercut; and
a central portion formed independent of both the upper and lower undercut gaskets and
configured to be received within the cavity; and
wherein the central portion is configured to fit between the upper and lower undercut gaskets.

2. An iron-type golf club head, comprising:
a body comprising:
a strikeface comprising a strikeface perimeter and a rear surface; and
a rear body extending from the strikeface perimeter and comprising a toe portion, a heel portion, a top rail comprising alignment features, and a sole;
the rear body and the rear surface of the strikeface cooperating to define a cavity and form an undercut;
the undercut being formed around a perimeter of the iron-type golf club head and comprising a top rail undercut and a sole undercut;
the alignment features of the top rail extending into the top rail undercut; and
and insert, comprising:
interconnecting walls defining a plurality of voids;
an upper undercut gasket configured to be received in the top rail undercut and comprising protrusions complementary to the alignment features of the top rail undercut;
a lower undercut gasket integrally formed with the upper undercut gasket and configured to be received in the sole undercut; and
a central portion independent of the upper and lower undercut gaskets and configured to be received within the cavity; and
wherein the central portion is configured to fit between the upper and lower undercut gaskets.

3. The iron-type golf club head of claim 1 or claim 2, wherein:
the top rail further comprises alignment features extending into the top rail undercut; and
the upper undercut gasket comprises protrusions complementary to the alignment features of the top rail undercut.

4. The iron-type golf club head of claim 1 or claim 2, wherein the insert is compressible for insertion into the cavity, the top rail undercut, and the sole undercut.

5. The iron-type golf club head of claim 1 or claim 2, wherein the upper undercut gasket does not comprise the plurality of voids.

6. The iron-type golf club head of claim 1 or claim 2, wherein the plurality of voids comprises a void shape selected from the group consisting of cubic, hexagonal, gyroid, diamond, and honeycomb.

7. The iron-type golf club head of claim 1 or claim 2, wherein the upper and lower undercut gaskets are formed from a low-density material selected from the group consisting of: foam, polymer, and rubber.

8. The iron-type golf club head of claim 1 or claim 2, wherein the central portion comprises a badge layer that is visible from an exterior view of the iron-type golf club head.

9. The iron-type golf club head of claim 8, wherein the badge layer is formed of a badge material selected from the group consisting of: metal, polymer, ceramic, and plastic.

10. The iron-type golf club head of claim 1 or claim 2, wherein the central portion comprises an adhesive layer configured to secure the central portion to the rear surface of the strikeface.

11. The iron-type golf club head of claim 10, wherein the adhesive layer is formed from the group consisting of liquid adhesive and double-sided tape.

12. The iron-type golf club head of claim 1 or claim 2, wherein the insert does not extend or protrude beyond the rear body.
